(19) Europäisches Patentamt / European Patent Office / Office européen des brevets

(11) **EP 2 929 459 B1**

(12) **FASCICULE DE BREVET EUROPEEN**

(45) Date de publication et mention
de la délivrance du brevet:
**12.07.2023 Bulletin 2023/28**

(21) Numéro de dépôt: **13818270.4**

(22) Date de dépôt: **09.12.2013**

(51) Classification Internationale des Brevets (IPC):
**G06F 17/17** $^{(2006.01)}$    **G01R 29/26** $^{(2006.01)}$

(52) Classification Coopérative des Brevets (CPC):
**G06F 17/17;** G01R 29/26

(86) Numéro de dépôt international:
**PCT/FR2013/053001**

(87) Numéro de publication internationale:
**WO 2014/091133 (19.06.2014 Gazette 2014/25)**

(54) **PROCÉDÉ ET DISPOSITIF D'ÉVALUATION PRÉDICTIVE DE LA PUISSANCE D'INTERMODULATION DANS UN DISPOSITIF ÉLECTRONIQUE**

VERFAHREN UND VORRICHTUNG ZUR PRÄDIKTIVEN BEWERTUNG DER INTERMODULATIONSLEISTUNG IN EINER ELEKTRONISCHEN VORRICHTUNG

METHOD AND DEVICE FOR PREDICTIVE EVALUATION OF THE INTERMODULATION POWER IN AN ELECTRONIC DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.12.2012 FR 1261839**

(43) Date de publication de la demande:
**14.10.2015 Bulletin 2015/42**

(73) Titulaire: **Centre National d'Etudes Spatiales (CNES)
75001 Paris (FR)**

(72) Inventeurs:
• **SOMBRIN, Jacques**
  **F-31400 Toulouse (FR)**
• **SOUBERCAZE-PUN, Geoffroy**
  **F-31130 Flourens (FR)**
• **ALBERT, Isabelle**
  **F-31750 Escalquens (FR)**

(74) Mandataire: **Germain Maureau
12, rue Boileau
69006 Lyon (FR)**

(56) Documents cités:
• **JACQUES SOMBRIN ET AL: "New models for passive non linearities generating intermodulation products with non-integer slopes", ANTENNAS AND PROPAGATION (EUCAP), 2013 7TH EUROPEAN CONFERENCE ON, IEEE, 8 avril 2013 (2013-04-08), pages 25-28, XP032429972, ISBN: 978-1-4673-2187-7**
• **JUSTIN HENRIE ET AL: "Prediction of Passive Intermodulation From Coaxial Connectors in Microwave Networks", IEEE TRANSACTIONS ON MICROWAVE THEORY AND TECHNIQUES, IEEE SERVICE CENTER, PISCATAWAY, NJ, US, vol. 56, no. 1, 2008, pages 209-216, XP011198642, ISSN: 0018-9480, DOI: 10.1109/TMTT.2007.912166 cité dans la demande**
• **Ahmed Sedek Mahmoud Sayed: "ULTRA WIDEBAND 5 W HYBRID POWER AMPLIFIER DESIGN USING SILICON CARBIDE MESFETs", PhD Thesis, 31 mai 2005 (2005-05-31), XP055076218, Extrait de l'Internet: URL:http://opus4.kobv.de/opus4-tuberlin/files/972/sayed_ahmed.pdf [extrait le 2013-08-22]**

- Ron Doerfler: "Fast Approximation of the Tangent, Hyperbolic Tangent, Exponential and Logarithmic Functions", , 11 octobre 2007 (2007-10-11), XP055076210, Extrait de l'Internet: URL:http://web.archive.org/web/20071011052 057/http://www.myreckonings.com/Dead_Recko ning/Online/Materials/Fast_Approximation_o f_Elementary_Functions.pdf [extrait le 2013-08-22] -& "Internet Wayback Machine information for "Fast Approximation of the Tangent, Hyperbolic Tangent, Exponential and Logarithmic Functions"", , 11 octobre 2007 (2007-10-11), XP055076216, Extrait de l'Internet: URL:http://web.archive.org/web/20070801000 000*/http://www.myreckonings.com/Dead_Reck oning/Online/Materials/Fast_Approximation_ of_Elementary_Functions.pdf [extrait le 2013-08-22]
- BARUFFA G ET AL: "A Fast Algorithm to Find Generic Odd and Even Order Intermodulation Products", IEEE TRANSACTIONS ON WIRELESS COMMUNICATIONS, IEEE SERVICE CENTER, PISCATAWAY, NJ, US, vol. 6, no. 10, octobre 2007 (2007-10), pages 3749-3759, XP011194421, ISSN: 1536-1276, DOI: 10.1109/TWC.2007.060080
- N. BLACHMAN: "Detectors, bandpass nonlinearities, and their optimization: Inversion of the Chebyshev transform", IEEE TRANSACTIONS ON INFORMATION THEORY, vol. 17, no. 4, juillet 1971 (1971-07), pages 398-404, XP055075933, ISSN: 0018-9448, DOI: 10.1109/TIT.1971.1054647
- Jacques Sombrin: "Non linéarités passives", Conférence XLIM 4, 4 avril 2012 (2012-04-04), pages 1-22, XP055099694, Extrait de l'Internet: URL:http://s2i.ed.univ-poitiers.fr/sites/s 2i.ed.univ-poitiers.fr/IMG/pdf/Non_lineari tes_passives_V2_.pdf [extrait le 2014-01-31] -& "Internet Wayback Machine information about document: Non linéarités passives", , 2012, XP055099764, Extrait de l'Internet: URL:https://web.archive.org/web/2012041500 0000*/http://s2i.ed.univ-poitiers.fr/sites /s2i.ed.univ-poitiers.fr/IMG/pdf/Non_linea rites_passives_V2_.pdf [extrait le 2014-01-31]
- BOLLI P ET AL: "PASSIVE INTERMODULATION ON LARGE REFLECTOR ANTENNAS", IEEE ANTENNAS AND PROPAGATION MAGAZINE, IEEE SERVICE CENTER, PISCATAWAY, NJ, US, vol. 5, no. 44, octobre 2002 (2002-10), pages 13-20, XP001141201, ISSN: 1045-9243, DOI: 10.1109/MAP.2002.1077773

**Description**

L'invention concerne un procédé et un dispositif d'évaluation prédictive de puissance d'intermodulation dans un dispositif électronique.

Les phénomènes d'intermodulation apparaissent dans les dispositifs électroniques traitant plusieurs fréquences simultanément et comprenant des composants électroniques non linéaires. L'intermodulation est le résultat, dans un signal de sortie du dispositif électronique, de distorsions générées par ces composants électroniques non linéaires à partir d'un signal d'entrée du dispositif électronique. L'intermodulation se manifeste notamment par l'apparition de nouvelles composantes de fréquences dans le signal de sortie. Les fréquences de ces composantes d'intermodulation sont obtenues par addition ou soustraction de multiples des fréquences présentes dans le signal d'entrée. Le résultat de l'addition des modules des facteurs multiplicateurs des fréquences d'entrée utilisées pour calculer la fréquence d'une composante d'intermodulation est désigné par "ordre d'intermodulation".

Les phénomènes d'intermodulation peuvent être dus à des composants électroniques actifs tels que des amplificateurs, ou à des composants électroniques passifs tels que des connecteurs, des filtres ou des antennes. Les distorsions d'intermodulation active (dues aux composants actifs) sont de puissance bien plus importante que les distorsions d'intermodulation passive (dues aux composants passifs), mais elles sont aussi plus facilement connues et donc corrigibles : on peut par exemple les éliminer grâce à un filtre adéquat, notamment par un filtre en sortie d'un amplificateur ayant une réjection importante dans la bande de réception.

En revanche les distorsions d'intermodulation passive ne peuvent pas toutes être éliminées par filtrage en particulier parce qu'elles peuvent être générée dans le filtre ou les équipements passifs qui suivent le filtre. De plus leur puissance devient significative dans les dispositifs électroniques fonctionnant à des niveaux de puissance élevée. Dans les dispositifs électroniques de réception disposés à portée - notamment à proximité - de dispositifs fonctionnant à haute puissance, les distorsions d'intermodulation passive sont donc dominantes par rapport aux distorsions d'intermodulation active.

Plus particulièrement dans les dispositifs électroniques de télécommunications à bande large, des produits d'intermodulation passive issue des signaux d'émission ont des fréquences dans la bande de réception. Cela est d'autant plus le cas que les bandes de radiofréquences de télécommunications sont de plus en plus densément peuplées. Or les signaux de réception étant toujours de puissance inférieure aux signaux d'émission, les produits d'intermodulation passive issus des signaux d'émission peuvent bruiter la réception de signaux de façon significative.

Tel est par exemple le cas dans les dispositifs d'émission/réception de signaux de télécommunications de longue portée qui utilisent un grand nombre de fréquences porteuses en émission et en réception, et ce en bande large. Ce phénomène est particulièrement gênant dans les dispositifs de télécommunications à bord de satellites, d'avions ou, au sol, dans les relais de télécommunications pour téléphones mobiles. Les phénomènes d'intermodulation y sont suffisamment importants pour avoir conduit certains constructeurs de satellites à doubler leur dispositif d'émission/réception, ce qui représente un coût supplémentaire de fabrication et de lancement très élevé. En particulier, les spécifications techniques de tels dispositifs sont toujours très élevées à cause de marges de calcul importantes, de sorte que les matériels utilisés sont particulièrement coûteux, parfois sans raison car leur comportement réel est moins désavantageux que prévu.

Il est donc essentiel de pouvoir simuler le comportement d'un tel dispositif électronique, dit dispositif simulé, de façon à pouvoir évaluer et prédire les niveaux de puissance de ces produits d'intermodulation et ainsi mieux les prendre en compte lors de la conception du dispositif simulé lui-même et/ou d'un système l'incorporant. Un procédé d'évaluation prédictive de puissance d'intermodulation performant doit aussi permettre de simplifier les étapes de mesure et de vérification avant la mise en service.

De nombreux modèles ont déjà été élaborés pour modéliser et tenter de prédire le comportement d'un composant électronique ou d'un dispositif électronique non linéaire. Dans la plupart des modèles, un polynôme simple est utilisé pour modéliser le comportement du dispositif simulé. Un tel polynôme permet de prédire des puissances d'intermodulation évoluant selon des pentes entières, c'est-à-dire que les puissances d'intermodulation évoluent selon des exposants entiers en fonction d'une puissance d'au moins une composante du signal d'entrée.

On désigne par "pente" le coefficient directeur d'une fonction en dB/dB faisant correspondre à une puissance du signal d'entrée une puissance d'une composante du signal de sortie. Par exemple on exprime la pente représentative de la dépendance de la puissance, dans le signal de sortie, d'une composante porteuse introduite dans un signal d'entrée en fonction de sa puissance dans le signal d'entrée. On peut aussi avantageusement exprimer la dépendance de la puissance, dans le signal de sortie, d'une composante issue d'un produit d'intermodulation en fonction de la puissance d'une autre composante de fréquence distincte (porteuse par exemple) introduite dans le signal d'entrée ou en fonction de la puissance totale du signal d'entrée.

Les pentes correspondent au(x) degré(s) du(des) terme(s) du polynôme. Or les mesures effectuées sur des dispositifs électroniques ne sont pas toujours cohérentes avec une modélisation à pentes entières.

Des polynômes comprenant de nombreux termes ont donc été proposés pour mieux approcher les mesures constatées. Ainsi on connaît le document "Prediction of passive intermodulation from coaxial connectors in microwave networks", Henrie J., Christianson A., J. Chappell W., Purdue University, in IEEE Transactions on Microwave Theory and Techniques, Vol. 56, No1, January 2008.

Dans ce document, une fonction polynomiale de degré 49 et de 24 termes est utilisée pour approcher une courbe de mesures d'une puissance d'intermodulation pour un produit d'intermodulation particulier (i.e. à une fréquence particulière, dans ce cas le troisième ordre d'intermodulation passive).

Cependant, cette fonction ne permet pas de prédire les puissances d'intermodulation des autres produits d'intermodulation à d'autres fréquences (ordres 5, 7, ... d'intermodulation par exemple).

En outre, si une telle fonction approche de façon satisfaisante les valeurs de puissance d'intermodulation du troisième ordre sur la plage de valeurs mesurées, elle diverge rapidement au-delà de cette plage de valeurs, notamment à cause du terme de degré 49. Il est donc impossible, avec une telle fonction, de prédire le comportement du dispositif simulé au-delà de la valeur maximale de puissance du signal d'entrée pour laquelle des mesures de puissance d'intermodulation ont été effectuées.

L'invention vise donc à pallier ces inconvénients.

L'invention vise à proposer un procédé fiable et précis d'évaluation et de prédiction de puissances d'intermodulation dans un dispositif électronique.

L'invention vise notamment à proposer un procédé permettant d'obtenir des puissances d'intermodulation proches de la réalité pour des plages de valeurs non mesurées.

L'invention vise aussi à proposer un procédé permettant d'obtenir des puissances d'intermodulation pour des composantes d'intermodulation (fréquences) sur lesquelles (auxquelles) aucune mesure n'a été réalisée.

L'invention vise plus particulièrement à proposer un procédé permettant d'obtenir une fonction représentative du comportement réel du dispositif électronique.

L'invention vise en outre à proposer un procédé permettant d'obtenir rapidement une fonction représentative du comportement réel du dispositif électronique.

L'invention vise aussi à proposer un procédé dans lequel le nombre de mesures à effectuer sur le dispositif électronique est réduit.

L'invention vise notamment un procédé dans lequel il n'est pas nécessaire d'effectuer des mesures à pleine puissance sur le dispositif électronique.

L'invention propose plus particulièrement un procédé d'évaluation de puissance d'intermodulation dans un dispositif passif.

L'invention vise à proposer un procédé permettant de déterminer les puissances de composantes d'intermodulation produites par un dispositif électronique non-linéaire, dit dispositif simulé, et dont les fréquences sont dans la bande de réception d'un dispositif électronique récepteur des signaux produits par le dispositif simulé.

Dans tout le texte, on désigne par "puissance d'intermodulation" la puissance d'un produit d'intermodulation (d'ordre et donc de fréquence déterminée). Une telle puissance d'intermodulation peut être exprimée en Watts (W), milliWatts (mW), ou dBm (dBmW soit en décibels relatifs à un milliwatt (1mW)).

On désigne par "rapport d'intermodulation" le rapport d'une puissance d'intermodulation en sortie d'un dispositif simulé sur la puissance d'un signal appliqué à l'entrée dudit dispositif simulé, notamment sur la puissance d'un signal porteur. Un tel rapport peut aussi être l'expression de la somme des puissances d'intermodulations de chaque produit d'intermodulation sur la puissance totale du signal d'entrée (toutes composantes d'entrée confondues). Un tel rapport d'intermodulation est par exemple exprimé en dB.

On désigne par " série réelle" toute fonction pouvant être exprimée sous la forme d'une somme à nombre de termes fini ou infini, de fonctions puissance à exposants entiers ou réels. On étend donc la définition de la série entière à une série, dite série réelle, pouvant comprendre au moins un terme de degré réel non-entier. Plus particulièrement, on désigne par "polynôme réel" (ou "polynomiale réelle") une fonction constituée d'une somme finie de fonctions puissance dont l'un des exposant au moins peut être un réel non-entier.

L'invention concerne donc un procédé d'évaluation prédictive de puissance d'intermodulation dans un dispositif électronique, non-linéaire comprenant au moins une entrée de signal et une sortie de signal, procédé dans lequel :

- un signal, dit signal d'entrée, comprenant au moins deux composantes de fréquences distinctes est introduit à une entrée du dispositif électronique,
- des valeurs, dites valeurs mesurées, représentatives d'au moins une puissance d'au moins une composante d'un signal, dit signal de sortie, produit par le dispositif électronique à une sortie du dispositif électronique à partir du signal d'entrée, sont obtenues par mesure,
- des valeurs de puissance, dites puissances d'intermodulation, d'au moins une composante, dite composante d'intermodulation, d'un signal de sortie, produite par une distorsion d'intermodulation entre au moins deux composantes du signal d'entrée sont évaluées de façon prédictive à partir d'une fonction, dite fonction prédictive f, déterminée à l'aide d'au moins deux valeurs mesurées caractérisé en ce que :

- la fonction prédictive f comprend au moins une partie impaire V = F.G, formée de la multiplication

  - d'une fonction impaire F,
  - et d'une fonction G = Q ∘ g qui est la composée

    - d'une fonction g paire telle que $g : \mathbb{R} \to \mathbb{R}^+$,
    - par une fonction Q sous forme de série, dite série réelle, comprenant au moins un terme de degré q,

    avec $q \in \{\mathbb{R}_+ - \mathbb{N}\}$.

La fonction Q est avantageusement exprimée sous forme de série réelle. Cependant, la fonction Q peut être exprimée sous d'autres formes conventionnelles distinctes dès lors qu'elle est développable en série réelle.

Le dispositif, dit simulé, comprend au moins un composant non-linéaire de traitement du signal entre l'entrée sur laquelle le signal d'entrée est introduit et la sortie sur laquelle le signal de sortie est mesuré pour obtenir lesdites valeurs mesurées. Un dispositif simulé non-linéaire est par exemple un connecteur, un guide d'onde, une antenne d'émission, une antenne de réception, un filtre, une antenne d'émission/réception, ou une combinaison en série et/ou en parallèle de l'un ou plusieurs de ces composants.

Le dispositif simulé est par exemple un dispositif de communication, notamment d'émission/réception de plusieurs signaux modulés. Le dispositif simulé est adapté pour pouvoir fonctionner à fortes puissances d'émission, notamment avec un grand nombre de fréquences porteuses simultanément dans une même bande d'émission.

L'invention permet d'évaluer par calcul et de façon prédictive, à partir d'un nombre restreint de mesures, des puissances d'intermodulation dans les conditions réelles de fonctionnement du dispositif simulé. Un tel procédé est particulièrement avantageux pour des satellites qui sont inaccessibles une fois en fonctionnement.

Un tel procédé permet de réduire largement les coûts de test au sol. En effet, grâce à ce procédé, il n'est plus nécessaire d'effectuer un grand nombre de mesures à des puissances élevées correspondant au fonctionnement en conditions réelles du dispositif simulé.

Le signal de sortie d'un dispositif simulé non linéaire dans lequel on a introduit le signal d'entrée à deux composantes de fréquences distinctes f1 et f2 comprend notamment des composantes de fréquences f1 et f2 mais aussi des composantes harmoniques (H) qui sont des multiples de ces fréquences ($H_2$=2f1 et 2f2, $H_3$=3f1 et 3f2, ...), ainsi que des composantes d'intermodulation (IM) de fréquences, dites fréquences d'intermodulation, obtenues par addition ou soustraction de multiples des fréquences f1 et f2 ($IM_2$=f2-f1 et f1+f2 ; $IM_3$=2f2-f1 et 2f 1 -f2 ; $IM_4$=2f2-2f1 et 2f2+2f1 ; $IM_5$= 3f2-2f1 et 3f1-2f2 ; etc.). L'ordre de chaque composante d'intermodulation est calculé comme la somme des modules des coefficients multiplicateurs appliqués aux fréquences f1 et f2 pour obtenir la fréquence de ladite composante d'intermodulation. Ainsi les fréquences $IM_2$ correspondent à des produits d'intermodulation d'ordre deux, $IM_3$ à ceux d'ordre trois, etc.

On appelle "rang harmonique" ou "numéro de zone" la somme des coefficients multiplicateurs des harmoniques ou des intermodulations. Par exemple, l'intermodulation d'ordre 3, IM3=2f2-f1 est dans la première zone (ou rang 1) alors que l'intermodulation d'ordre 2, IM2=f 1 +f2 est dans la deuxième zone (ou rang harmonique 2).

On s'aperçoit que les composantes d'intermodulation les plus gênantes sont les composantes d'intermodulation d'ordre impair dont les fréquences sont proches des fréquences f1 et f2, c'est-à-dire les composantes d'intermodulation d'ordre impair de la première zone (rang 1). En effet, elles sont difficilement filtrées et elles peuvent être retrouvées dans une bande de réception, notamment en bande large. En effet, dans les dispositifs d'émission/réception en bande large, la bande de réception est - relativement à la largeur de la bande - proche de la bande d'émission.

Les fréquences des composantes du signal d'entrée sont avantageusement et selon l'invention choisies dans une bande passante du dispositif simulé. Dans le cas d'un dispositif électronique d'émission/réception, on choisit les fréquences des composantes du signal d'entrée dans la bande d'émission du dispositif. En effet dans un tel dispositif certaines composantes d'intermodulation issues de composantes du signal d'entrée de fréquences dans la bande d'émission ont des fréquences dans la bande de réception et bruitent les signaux reçus.

Un procédé selon l'invention permet de déterminer une fonction prédictive f très proche de la fonction de transfert du dispositif simulé, dont on cherche à modéliser et prévoir le comportement.

La fonction prédictive f est avantageusement utilisée pour extrapoler les valeurs mesurées sur une composante d'intermodulation à des composantes d'intermodulation d'ordres différents.

Un procédé selon l'invention permet donc avantageusement de prévoir des puissances d'intermodulation pour des composantes d'intermodulation de fréquences distinctes de celles sur lesquelles les valeurs mesurées ont été mesurées.

Ainsi, dans un procédé conforme à l'invention, des valeurs mesurées sont obtenues par mesure de puissance sur les composantes d'intermodulation (dans un signal de sortie) de puissances les plus importantes afin de minimiser l'erreur de mesure, tout en pouvant obtenir des valeurs prédictives sur les puissances d'intermodulation d'autres composantes d'intermodulation.

De même, conformément à l'invention, la complexité du modèle de fonction prédictive f est choisie en fonction de l'éloignement fréquentiel des composantes d'intermodulation dont on souhaite déterminer les puissances de façon prédictive par rapport aux composantes d'intermodulation sur lesquelles les valeurs mesurées ont été mesurées.

Ainsi, on réalise par exemple des mesures sur la composante d'intermodulation d'ordre 3, puis on détermine la fonction prédictive f, et enfin on utilise cette fonction prédictive f pour obtenir de façon prédictive les valeurs des puissances d'intermodulation des composantes d'intermodulation d'ordre 5 et 7. Si l'on cherche à obtenir les puissances d'intermodulation des composantes d'intermodulation d'ordres 11 et 13 (par exemple parce qu'elles ont des fréquences dans la bande de réception d'un dispositif récepteur du dispositif simulé) on réalise des mesures de puissance sur la composante d'intermodulation d'ordre 11 au moins. Ainsi, lorsque la mesure est possible, on réalise avantageusement des mesures sur la(les) composante(s) d'intermodulation dont on sait que la présence pourra gêner le fonctionnement du dispositif simulé ou de dispositifs récepteurs du dispositif simulé.

La fonction prédictive f est aussi avantageusement utilisée pour extrapoler les valeurs mesurées à des plages de puissance du signal d'entrée pour lesquelles aucune mesure n'est réalisée.

Un procédé selon l'invention permet aussi de déterminer de manière théorique des puissances d'intermodulation qui n'ont pas été mesurés sur un prototype du dispositif simulé ou sur le dispositif simulé lui-même, et ce sans devoir le faire fonctionner à sa puissance normale de fonctionnement. Un procédé selon l'invention est particulièrement avantageux pour réaliser une évaluation prédictive de puissance d'intermodulation dans un dispositif électronique d'émission/réception de signaux.

Plus particulièrement un procédé selon l'invention permet avantageusement de déterminer des puissances d'intermodulation d'au moins une composante d'intermodulation pour une gamme entière de puissances du signal d'entrée, bien que les valeurs mesurées n'aient été effectuées que sur une plage réduite de puissances du signal d'entrée.

Le signal d'entrée utilisé pour réaliser ces mesures est de faible puissance car il ne comprend qu'un nombre restreint de composantes, notamment un nombre restreint de composantes porteuses. Or un dispositif électronique d'émission/réception est adapté, en conditions réelles, pour traiter grande quantité de signaux porteurs en parallèle, de sorte que la puissance totale traitée en conditions réelles par le dispositif électronique est beaucoup plus élevée.

Un procédé selon l'invention permet donc d'évaluer et de prévoir des puissances d'intermodulation à de fortes puissances de signal d'entrée. Un tel procédé permet de prévoir des puissances d'intermodulation pour un grand nombre de composantes dans le signal d'entrée uniquement à partir de mesures effectuées sur un signal de sortie produit avec un signal d'entrée ne comprenant que deux fréquences distinctes - notamment deux fréquences porteuses pour des dispositifs électroniques de télécommunications.

Pour ce faire, dans un procédé conforme à l'invention, lorsque la fonction prédictive f est une fonction simple, on réalise un calcul analytique. Lorsqu'au contraire la fonction prédictive f est une fonction plus complexe, une simulation et un calcul numérique permettent d'obtenir ces valeurs prédictives.

L'invention permet d'obtenir un procédé d'évaluation de puissance d'intermodulation dans lequel un modèle simple est utilisé.

L'invention permet d'obtenir, pour la première fois, un procédé d'évaluation de puissance d'intermodulation particulièrement fiable et proche de la réalité. Une fonction prédictive f construite conformément à un procédé selon l'invention permet d'obtenir une modélisation particulièrement fiable d'un dispositif électronique non-linéaire, en particulier d'un dispositif électronique passif.

En effet, les mesures de puissance d'intermodulation évoluent rarement selon des pentes (en dB/dB) entières. Les mesures montrent plus généralement des puissances d'intermodulation évoluant selon des pentes fractionnaires ou réelles, ce qui est souvent interprété comme des imprécisions de mesures.

Or une fonction prédictive f construite conformément à un procédé selon l'invention permet effectivement d'obtenir des valeurs de puissance d'intermodulation évoluant selon des pentes fractionnaires ou réelles, conformément aux observations.

En outre, une fonction prédictive f conforme à l'invention permet d'obtenir des valeurs de puissance d'intermodulation évoluant selon des pentes entières paires pour des composantes d'intermodulation d'ordre impair, et selon des pentes entières impaires pour des composantes d'intermodulation d'ordre pair.

En effet, le degré d'au moins un terme de la série réelle de la fonction Q appartient à l'ensemble des réels positifs à l'exclusion des entiers naturels. La partie impaire de la fonction prédictive f permet donc d'obtenir des pentes de puissance d'intermodulation de valeur fractionnaire ou réelle, ce qui correspond au comportement réel de la plupart des dispositifs électroniques non linéaires, en particulier des dispositifs passifs.

Un procédé selon l'invention permet de modéliser un dispositif électronique dont les puissances d'intermodulation évoluent selon des pentes non-entières grâce au(x) terme(s) de degré réel non-entier de la fonction Q. Cependant, dans certains cas particuliers, les puissances d'intermodulation d'une composante d'intermodulation évoluent sur une portion de plage de puissances du signal d'entrée selon une pente de valeur proche ou égale à un entier naturel.

C'est pourquoi, avantageusement, dans certains modes de réalisation d'un procédé selon l'invention, la fonction Q comprend en outre au moins un terme de degré n, avec $n \in \mathbb{N}$. La fonction Q peut donc comprendre un ou plusieurs termes de degré n choisi(s) dans l'ensemble des entiers naturels ($\mathbb{N}$) et un ou plusieurs termes de degré q choisi(s) dans l'ensemble des réels positifs non-entiers ($\mathbb{R}_+ - \mathbb{N}$).

La valeur de chaque degré q peut aussi avantageusement être choisie en fonction de caractéristiques techniques du dispositif simulé. Ainsi, dans un procédé conforme à l'invention, la valeur de chaque degré q peut être choisie sans aucune mesure préalable sur le dispositif simulé.

En effet, le degré q réel non-entier est représentatif de caractéristiques techniques du dispositif simulé. Plus particulièrement, le degré q réel non-entier est représentatif du comportement physique du dispositif simulé, plus précisément, il est représentatif d'au moins une partie du comportement physique du dispositif simulé. Le degré q réel non-entier est notamment représentatif du comportement non-linéaire du dispositif simulé pour au moins une composante d'intermodulation, dans au moins une plage de valeurs de puissance du signal d'entrée.

Or la non-linéarité du dispositif simulé dépend notamment de sa nature, des matériaux le constituant et, le cas échéant, de la qualité de ses contacts électriques. Par exemple, le comportement non-linéaire d'une antenne de radiocommunication dépend principalement de sa nature et du matériau dans lequel sa partie réflective est réalisée (métallique, composite (fibres de carbone à mats selon trois directions par exemple), etc.).

Une fonction prédictive f construite conformément à un procédé selon l'invention permet ainsi d'obtenir des valeurs de puissance d'intermodulation évoluant selon au moins deux pentes distinctes sur deux plages distinctes de valeurs de puissance du signal d'entrée, l'une au moins des pentes étant entière et de même parité que l'ordre de la composante d'intermodulation dont la puissance d'intermodulation est évaluée.

Par ailleurs, dans certains modes de réalisation d'un procédé selon l'invention:

- des puissances d'intermodulation de ladite composante d'intermodulation sont évaluées de façon prédictive à partir d'une fonction, dite fonction comparative h,

- ladite fonction comparative h est polynomiale avec des termes de degré t, avec $t \in \mathbb{N}$,

- les puissances d'intermodulation de ladite composante d'intermodulation obtenue à partir de la fonction comparative h sont comparées aux puissances d'intermodulation de ladite composante d'intermodulation obtenue à partir de la fonction prédictive f.

La fonction comparative h correspond à une fonction de l'état de la technique. Ainsi, dans l'invention, les résultats obtenus par une méthode conforme à l'invention sont comparées aux résultats obtenus par une méthode antérieure.

En particulier, pour une puissance d'intermodulation d'une composante d'intermodulation d'ordre 3, une fonction comparative h polynomiale comprenant un terme de degré 3 est utilisée.

De plus, un procédé selon l'invention est aussi caractérisé en ce qu'une valeur correspondant à un ratio de puissance d'un signal d'entrée sur la puissance d'une composante d'intermodulation, est calculée à partir de la fonction prédictive f. Une spécification technique d'un dispositif simulé est ainsi déterminée.

Or il est démontré, que la simulation d'un dispositif électronique par un procédé conforme à l'invention est beaucoup plus proche du comportement réel du dispositif, permettant ainsi de relâcher les spécifications prévues par d'autres procédés mettant en oeuvre une fonction du type de la fonction comparative h (cf. « Multicarrier Passive Intermodulation Prédiction from 2-carrier measurements », Sombrin, Soubercaze-Pun, Albert, 31st AIAA International Communication Satellite Conférence, October 14-17, 2013, Florence, Italy). Ainsi, un opérateur peut choisir un dispositif simulé de moindre qualité et donc de moindre coût pour répondre à un même niveau de spécification technique.

La fonction g est paire et à valeurs positive dans l'ensemble des réels, de sorte que quelle que soit la fonction Q, la fonction G = Q ∘ g, est paire. Ainsi, la fonction V = F.G avec F impaire, est impaire.

Avantageusement et selon l'invention, la fonction g est la fonction module g telle que :

$$g : u \to |u|, \forall\, u \in \mathbb{R}.$$

La fonction module est, parmi les fonctions paire et à valeurs positive dans $\mathbb{R}$ une fonction particulièrement simple permettant de réaliser des calculs analytiques simples. En effet, elle ne modifie pas la valeur absolue de sa variable.

Ainsi, (Q ∘ g) est paire et la seule influence de g est de forcer cette parité, sans modifier l'amplitude donnée par Q.

Avantageusement et selon l'invention, la fonction F est la fonction signe qui attribue son signe à tout élément de $\mathbb{R}$ :

$$\mathrm{F} : u \to sign(u), \forall\, u \in \mathbb{R}.$$

Ainsi, la fonction F est la fonction signe telle que :

$$F(u) = -1, \forall\, u \in \mathbb{R}_-^*$$

$$F(u) = 0, \qquad u = 0$$

$$F(u) = +1, \forall\, u \in \mathbb{R}_+^*$$

La fonction signe est particulièrement avantageuse car elle permet de rétablir le signe de la fonction G, purement paire, en fonction de sa variable, perdu par la combinaison de la fonction module g à la fonction Q.

En outre, la fonction signe est constante en valeur absolue, ce qui élimine son influence dans le calcul prédictif des puissances d'intermodulation.

Ainsi, *F. (Q ∘ g)* est impaire et la seule influence de F est d'attribuer un signe, sans modifier l'amplitude donnée par *(Q ∘ g)*.

Alternativement, avantageusement et selon l'invention, la fonction F est une fonction tangente hyperbolique de la forme :

$$\mathrm{F} : u \to tanh(ku), k \in \mathbb{R}, \forall\, u \in \mathbb{R}.$$

En effet, la fonction signe présente l'inconvénient d'être discontinue en zéro. Cela peut rendre impossible l'utilisation de certains logiciels de simulation.

Ainsi, on choisit avantageusement F égale à tanh(ku) avec k choisi grand, notamment k est tel que ku est supérieur à 1 pour toutes valeurs de u, notamment k est supérieur à 10, plus particulièrement, k est supérieur à 100. En effet lorsque k tend vers l'infini, tanh(ku) tend vers la fonction signe. De plus, la fonction tangente hyperbolique - a fortiori sous la forme tanh(ku) avec k choisi grand - ne modifie l'amplitude de donnée par *(Q ∘ g)* qu'à proximité de zéro.

Avantageusement et selon l'invention, la fonction Q comprend un nombre fini de termes non-nuls.

Avantageusement et selon l'invention, la fonction Q est un polynôme, dit polynôme réel, comprenant au moins un terme de degré q, avec $q \in \{\mathbb{R}_+ - \mathbb{N}\}$.

De plus, la fonction Q comprend avantageusement un nombre de termes inférieur à cinq.

Plus particulièrement, la fonction polynomiale réelle Q comprend un nombre de termes inférieurs à trois, notamment inférieur ou égal à deux.

La fonction Q utilisée dans la construction de la fonction prédictive f est donc particulièrement simple, de sorte que f l'est aussi.

Le nombre restreint de termes dans la fonction polynomiale réelle Q permet en outre d'obtenir une modélisation des puissances d'intermodulation fiables au-delà des plages de puissance du signal d'entrée utilisées pour obtenir les valeurs mesurées. Ainsi, dans un procédé selon l'invention on obtient une fonction prédictive f représentative du comportement du dispositif simulé qui ne diverge pas rapidement au-delà des plages de mesures et qui, au contraire, correspond aux mesures constatées sur de nombreux dispositifs électroniques.

Avantageusement et selon l'invention, les valeurs mesurées comprennent une pluralité de valeurs de puissances d'intermodulation mesurées sur une même composante d'intermodulation.

Plus particulièrement, avantageusement et selon l'invention, les valeurs mesurées sont obtenues par mesure de puissance sur au moins une composante d'intermodulation présente dans le signal de sortie. Les valeurs mesurées sont donc obtenues par mesure de puissances d'intermodulation.

Plus particulièrement, avantageusement et selon l'invention, seules des puissances d'intermodulation sont mesurées. Ainsi, toutes les valeurs mesurées sont des valeurs de puissance d'intermodulation. Notamment, les valeurs mesurées sont des valeurs de puissance d'une ou plusieurs composantes d'intermodulation, effectuées pour une ou plusieurs puissances distinctes du signal d'entrée.

Avantageusement, les valeurs mesurées sont constituées de valeurs de puissances d'intermodulation d'une pluralité de composantes d'intermodulation pour plusieurs puissances distinctes du signal d'entrée.

Avantageusement et selon l'invention, chaque puissance d'intermodulation de chaque composante d'intermodulation est évaluée, c'est-à-dire calculée, par une transformée de Tchebychev d'au moins une partie de la fonction prédictive f.

Chaque puissance d'intermodulation de chaque composante d'intermodulation d'ordre impair est déterminé par la transformée de Tchebychev de la partie impaire de la fonction prédictive f.

Plus particulièrement, la transformée de Tchebychev d'ordre m ( $m \in \mathbb{N}$ ) de la fonction prédictive f permet d'obtenir l'amplitude et donc la puissance de la composante d'intermodulation d'ordre m d'un signal de sortie en fonction de l'amplitude (donc de la puissance) d'un signal d'entrée et/ou d'une composante du signal d'entrée.

Ainsi, pour une fonction polynomiale réelle Q telle que :

$$Q : u \to u^q, \forall\, u \in \mathbb{R}, \forall\, q \in \mathbb{R}_+$$

$$u = \mathrm{a}.\cos(\theta)$$

le signal de sortie peut être représenté par :

$$v = f(u) = f(\mathrm{a}.\cos(\theta))$$

$$= \frac{1}{2}f_0(a) + \sum_{m=1}^{\infty} f_m(a).\cos(m\theta)\ , \quad m \in \mathbb{N}$$

où $f_m(a)$ est la transformée de Tchebychev d'ordre m de f(u) :

$$f_m(a) = \frac{1}{\pi} \int_{-\pi}^{+\pi} f(a.\cos(\theta)).\cos(m\theta).d\theta\ , \quad m \in \mathbb{N}$$

Ainsi en prenant l'exemple d'une fonction polynomiale réelle Q telle que :

$$Q : u \to u^q, \forall\, u \in \mathbb{R}, \forall\, q \in \mathbb{R}_+$$

$$f : u \to F(u).|u|^q, \forall\, u \in \mathbb{R}, \forall\, q \in \mathbb{R}_+$$

et avec la fonction signe pour fonction F, on obtient une transformée de Tchebychev d'ordre m de la fonction prédictive f de la forme :

$$f_m(a) = 2sign(a).\left(\frac{|a|}{2}\right)^q \frac{\Gamma(q+1)}{\Gamma\left(\frac{q+m}{2}+1\right).\Gamma\left(\frac{q-m}{2}+1\right)}\ , \quad \forall\, m \in \mathbb{N}$$

où a est l'amplitude du signal d'entrée u,
$f_m(a)$ est une fonction, dite fonction prédictive d'intermodulation, obtenue par la transformée de Tchebychev d'ordre m de la fonction prédictive f,
$\Gamma$ est l'extension de la fonction factorielle à l'ensemble $\mathbb{R}$ des réels.

Pour la première fois, la partie impaire V de la fonction prédictive f permet de modéliser l'ensemble des puissances d'intermodulation des composantes d'intermodulation d'ordre impair (de fréquences $IM_3$, $IM_5$, $IM_7$, ...), quel que soit le degré de la fonction Q dès lors que celui-ci comprend un terme de degré purement réel ou fractionnaire (non-entier). Ainsi, rien n'oblige de choisir un terme de Q de degré élevé pour obtenir les puissances d'intermodulation des produits d'ordres impairs élevés.

Lorsque F est de la forme tanh(ku), la forme analytique de chaque fonction prédictive d'intermodulation d'ordre m $f_m$ (obtenue par la transformée de Tchebychev d'ordre m de la fonction prédictive f) est complexe, de sorte qu'elle est obtenue par calcul numérique ou par simulation. En effet, la forme analytique des fonctions prédictives d'intermodulation $f_m$ est alors beaucoup plus complexe que lorsque F est la fonction signe.

Avantageusement et selon l'invention, la fonction prédictive f comprend en outre une partie paire U additionnée à la partie impaire V, de sorte que la fonction prédictive f est de la forme f = U + V, avec U = $P \circ g$ qui est la composée

- d'une fonction g paire telle que $g : \mathbb{R} \to \mathbb{R}^+$,
- par une fonction P sous forme de série, dite série réelle, comprenant au moins un terme de degré $p \in \{\mathbb{R} - \{2n, n \in \mathbb{N}\}\}$.

Comme Q, la fonction P est avantageusement une fonction développable sous forme de série réelle.

La partie paire U de la fonction prédictive f permet, dans un procédé selon l'invention, d'évaluer de façon prédictive les puissances d'intermodulation de l'ensemble des composantes d'intermodulation d'ordre pair (de fréquences IM2, IM4, IM6, ...). C'est particulièrement avantageux lorsque la bande de réception est éloignée de la bande d'émission, notamment lorsque la bande de réception est large ou n'est pas contenue entièrement dans la bande allant de la moitié à une fois et demi la fréquence centrale d'émission.

Comme pour les composantes d'intermodulation d'ordre impair, chaque puissance d'intermodulation de chaque composante d'intermodulation d'ordre pair est déterminée par la transformée de Tchebychev de même ordre de la partie paire de la fonction prédictive f.

Les coefficients et les exposants des termes de la fonction U - notamment de la fonction P - sont déterminés par la même méthode que décrite ci-dessus. Une méthode d'optimisation numérique permet notamment de minimiser l'erreur moyenne entre les valeurs mesurées et les valeurs prédites par une fonction prédictive d'intermodulation $f_m$.

Avantageusement et selon l'invention, la fonction P comprend un nombre fini de termes non-nuls.

De plus, avantageusement et selon l'invention, la fonction P est un polynôme, dit polynôme réel, comprenant au moins un terme de degré p, avec $p \in \{\mathbb{R}_+ - \{2n, n \in \mathbb{N}\}\}$.

De plus, la fonction P comprend avantageusement un nombre de termes inférieur à cinq. Plus particulièrement, la fonction polynomiale réelle P comprend un nombre de termes inférieurs à trois, notamment inférieur ou égal à deux.

La fonction P utilisée dans la construction de la fonction prédictive f est donc particulièrement simple, de sorte que f l'est aussi.

Ainsi, comme vu précédemment, grâce au terme purement réel de P, la partie paire U de la fonction prédictive f permet, malgré un nombre de termes dans P et un degré de P faibles, d'évaluer l'ensemble des puissances d'intermodulation des produits d'intermodulation pairs d'un dispositif simulé.

Afin d'évaluer uniquement les puissances d'intermodulation des produits d'intermodulation pairs, conformément à un procédé selon l'invention, seules les transformées de Tchebychev de la partie paire sont utilisées.

Si l'on cherche uniquement à déterminer les puissances d'intermodulation des produits d'intermodulation pairs, on peut rendre nulle la partie impaire V de la fonction prédictive f.

La partie paire U de la fonction prédictive f permet de plus de modéliser des dispositifs électroniques dont les produits d'intermodulation d'ordre pair présentent des pentes (en dB/dB) réelles non-entières-paires (pentes dans $\{\mathbb{R} - \{2n, n \in \mathbb{N}\}\}$).

Ainsi, une fonction prédictive f de la forme U+V avec U paire et V impaire permet d'obtenir les puissances d'intermodulations de tous les ordres de produits d'intermodulation.

La fonction prédictive f d'un procédé selon l'invention permet ainsi de modéliser de façon simple et fiable le comportement de n'importe quel dispositif électronique non-linéaire dans lequel apparaissent des phénomènes d'intermodulation.

La fonction prédictive f est de la forme :

$$f : u \to P(|u|) + F(u).Q(|u|), \qquad \forall\, u \in \mathbb{R}$$

Ainsi, il est aisé de distinguer la partie paire P(lul) de la partie impaire F(u).Q(lul) dans la fonction prédictive f, chaque partie permettant respectivement d'évaluer les puissances d'intermodulation d'ordre pair et d'ordre impair.

L'utilisation du module permet de s'assurer que les fonctions P(lul) et Q(lul) soient paires, quel que soit le degré, entier ou réel, de leurs termes, F étant impair, F(u).Q(lul) l'est aussi.

Avantageusement, dans un procédé conforme à l'invention :

- dans un premier temps, un modèle d'une fonction, dite fonction prédictive f, permettant d'obtenir de façon théorique le signal de sortie en fonction du signal d'entrée est choisi,
- puis la fonction prédictive f est déterminée à l'aide d'au moins deux valeurs mesurées.

Avantageusement, dans un procédé conforme à l'invention, la fonction prédictive f est au moins partiellement déterminée par approximation d'au moins deux valeurs mesurées représentatives de puissances d'intermodulation d'une même composante d'intermodulation, par une transformée de Tchebychev de la fonction prédictive f.

En particulier, une fois choisi le modèle de la fonction prédictive f, on détermine ladite fonction prédictive f en approximant les valeurs mesurées d'au moins une composante d'intermodulation par au moins une transformée de Tchebychev de la fonction prédictive f.

Plus particulièrement, la fonction prédictive f est au moins partiellement déterminée par approximation de valeurs mesurées représentatives de puissances d'intermodulation d'une même composante d'intermodulation, par une transformée de Tchebychev de la fonction prédictive f de même ordre que ladite composante d'intermodulation.

La fonction prédictive f peut ainsi être déterminée en approchant un jeu de valeurs de puissances d'intermodulation d'une unique composante d'intermodulation particulière par une transformée de la fonction prédictive f. Elle peut en outre être validité vérifiée grâce à un(d') autre(s) jeu(x) de valeurs de puissances d'intermodulation si l'on dispose de ces valeurs.

En effet, un procédé selon l'invention présente l'avantage de permettre d'obtenir un modèle fiable et représentatif du comportement réel d'un dispositif électronique, à partir d'une pluralité de puissance d'intermodulation d'une unique composante (c'est-à-dire à une unique fréquence) d'intermodulation. Ainsi, grâce à un procédé selon l'invention, les étapes de mesures sur un dispositif simulé sont simplifiées.

La fonction prédictive f peut être déterminée à l'aide de plusieurs jeux de valeurs de puissances d'intermodulation d'une pluralité de composantes d'intermodulation. La fonction prédictive f est avantageusement intégralement déterminée par approximation de valeurs mesurées représentatives de puissances d'intermodulation d'une pluralité des composantes d'intermodulation, par des transformées de Tchebychev de la fonction prédictive f de mêmes ordres que lesdites composantes d'intermodulation.

Les valeurs mesurées comprennent avantageusement une pluralité de jeux de puissances d'intermodulation correspondant chacun à une composante d'intermodulation. Avantageusement et selon l'invention, la fonction prédictive f (notamment les coefficients et les degrés des termes de cette fonction) est déterminée par approximation de valeurs mesurées comprenant plusieurs jeux de valeurs de puissances d'intermodulation, chaque jeu étant obtenu par mesure de puissance sur une composante d'intermodulation distincte de celles à partir desquelles les valeurs des autres jeux sont mesurées.

Plus particulièrement, avantageusement et selon l'invention, toutes les valeurs mesurées sont des puissances d'intermodulation. En effet, ce sont les seules valeurs intéressantes dans le cadre de la modélisation d'un dispositif électronique passif (dont la fonction de transfert est pratiquement linéaire) en vue d'en prédire les puissances d'intermodulation en fonctionnement réel. Les valeurs mesurées peuvent cependant comprendre des puissances d'intermodulation des composantes d'intermodulation dites d'ordre 1, c'est-à-dire aux fréquences, dites fréquences fondamentales, des composantes du signal d'entrée, et de la composante d'intermodulation dite d'ordre 0, c'est-à-dire une composante continue.

Parmi les produits d'intermodulation il existe toujours au moins deux composantes d'intermodulation de même ordre, situées en fréquences de part et d'autre des fréquences leur ayant donné naissance. Par exemple à l'ordre 3 il existe quatre composantes d'intermodulation: IM(2,-1)=2f1-f2, IM(-1,2)=2f2-f1, IM(2,1)=2f1+f2 et IM(1,2)=f1+2f2 pour un signal d'entrée comprenant deux composantes de fréquences distinctes f1 et f2. Cependant, à l'ordre 3, seules les fréquences IM(2,1)=2f1-f2, IM(1,2)=2f2-f1 dites de premier rang (ou zone 1) sont étudiées. En effet, les fréquences IM(2,1)=2f1+f2 et IM(1,2)=f1+2f2 sont proches des harmoniques de rang 3 des fréquences du signal d'entrée et sont donc éloignées (zone 3) des fréquences auxquelles les composantes d'intermodulation sont gênantes pour des dispositifs récepteurs.

Avantageusement, les valeurs mesurées comprennent des valeurs de puissances d'intermodulation pour les composantes d'intermodulation située du côté de la bande de réception d'un récepteur du dispositif simulé non-linéaire dont on souhaite prédire les produits d'intermodulation. Selon le même exemple, on réalise uniquement des mesures sur le produit d'intermodulation de fréquence 2f2-f1 si la bande de réception est plus haute que f2, et uniquement sur le produit d'intermodulation de fréquence 2f1-f2 si la bande de réception est plus basse que f1.

En outre, dans le but d'obtenir une fonction prédictive f la plus proche possible du comportement réel d'un dispositif simulé, on réalise avantageusement plusieurs mesures de puissance d'intermodulation d'une même composante d'intermodulation dans le signal de sortie, pour plusieurs puissances distinctes du signal d'entrée. Une pluralité des valeurs mesurées est obtenue pour des valeurs de puissance du signal d'entrée distinctes. Dans un procédé selon l'invention il n'est pas nécessaire de réaliser un nombre important de mesures à petits intervalles de puissance du signal d'entrée. En revanche, avantageusement et selon l'invention, un nombre réduit de valeurs mesurées est obtenu par mesures de puissance sur un signal de sortie à intervalles de puissance du signal d'entrée compris entre 1 dB et 10 dB dans la gamme allant de 1/100 de la puissance nominale (maximale) du dispositif jusqu'à la puissance nominale (maximale) du dispositif et si possible au-delà de cette puissance nominale. Les valeurs mesurées sont avantageusement obtenues pour des intervalles de puissances compris entre 1dB et 10dB au minimum entre 1/10 et 1 fois la puissance nominale du dispositif, par exemple dans le but de ménager le dispositif.

Avantageusement, dans un procédé selon l'invention, au moins une valeur mesurée est obtenue par mesures sur le signal de sortie avec une puissance totale du signal d'entrée comprise entre 50 % et 200 % de la puissance nominale maximale du dispositif simulé. Notamment, dans un procédé selon l'invention, au moins une valeur mesurée est obtenue par mesures sur le signal de sortie avec une puissance du signal d'entrée comprise entre 80 % et 150 % , et plus particulièrement entre 90 et 110 %, de la puissance maximale du dispositif simulé en fonctionnement.

Les prévisions réalisées par un procédé selon l'invention sont d'autant plus fiables que les valeurs mesurées l'ont été pour une large plage de puissances du signal d'entrée. En effet, le comportement d'un dispositif électronique non-linéaire s'éloigne d'autant plus du comportement d'un dispositif linéaire que la puissance du signal d'entrée (toute composantes/fréquences confondues) est élevée. C'est pourquoi il est utile de mesurer des valeurs de puissances d'intermodulation d'au moins une composante d'intermodulation pour une puissance élevée du signal d'entrée.

Par ailleurs, plus la fonction prédictive f est complexe - notamment plus elle comprend de termes lorsqu'elle est polynomiale - et plus le nombre de composantes d'intermodulation évaluées de façon fiable est important. Notamment, à nombre égal de termes, la précision de la prévision diminue lorsque l'ordre de la composante d'intermodulation dont on évalue les puissances d'intermodulation s'éloigne de l'ordre le plus élevé des composantes d'intermodulation sur lesquelles des mesures ont été réalisées. L'augmentation du nombre de termes de la fonction prédictive f peut permettre d'y remédier, mais sa détermination est alors plus complexe et ne peut être réalisé analytiquement. Sinon, des mesures de puissances d'intermodulation à des ordres plus élevés et proches de ceux des composantes d'intermodulation que l'on souhaite évaluer de façon prédictive, peuvent être réalisées.

De même, plus le nombre de composantes d'intermodulation desquelles on extrait des valeurs mesurées de puissance et qui sont approchées par des transformées de Tchebychev de la fonction prédictive f est important, et plus le nombre de composantes d'intermodulation évaluées de façon fiable est important. En effet, la détermination de la fonction prédictive f est d'autant plus fiable que des valeurs mesurées ont été effectuées sur plusieurs composantes d'intermodulation et que les coefficients et degrés des termes de la fonction prédictive f sont obtenus par optimisation des valeurs calculées par les différentes transformées de Tchebychev d'ordres correspondants aux ordres desdites composantes d'intermodulation pour lesquelles des valeurs ont été mesurées.

Les coefficients et les degrés des termes de la fonction prédictive f (notamment de la fonction Q pour les composantes d'ordres impairs) sont déterminés par une méthode d'optimisation numérique permettant de minimiser l'erreur moyenne entre les valeurs mesurées et les valeurs prédites par une fonction prédictive d'intermodulation $f_m$.

Ainsi, on construit une fonction prédictive f dont au moins une transformée de Tchebychev donne les valeurs mesurées. Plus particulièrement, on construit une fonction prédictive f par l'intermédiaire de l'une au moins de ses transformées de Tchebychev en minimisant l'erreur entre les valeurs de puissance calculées par chaque transformée de Tchebychev et les valeurs mesurées pour chaque produit d'intermodulation de même ordre que chaque transformée de Tchebychev (y compris d'ordre 0).

Par exemple, on détermine les coefficients et les degrés des termes de la fonction prédictive f en minimisant l'erreur entre les valeurs prédictives obtenues par la transformée $f_3$ de Tchebychev d'ordre 3 de la fonction prédictive f et les valeurs mesurées de puissance de la composante d'intermodulation d'ordre 3.

Pour déterminer les coefficients et les degrés des termes de la fonction prédictive f, l'erreur entre valeurs calculées par une ou plusieurs transformée(s) de Tchebychev de la fonction prédictive f et valeurs mesurées est par exemple minimisée par la méthode dite "des moindres carrés" permettant de minimiser l'erreur quadratique moyenne entre les valeurs prédites à partir de la fonction prédictive f (par salses transformée(s) de Tchebychev) et les valeurs mesurées. En outre, avantageusement et selon l'invention, on pondère la moyenne, de façon à attribuer un poids relativement plus important aux valeurs mesurées les plus fiables qu'aux valeurs mesurées les moins fiables.

Ainsi, on attribue avantageusement un poids plus important aux valeurs mesurées des composantes d'intermodulation d'ordre faible. En effet, la puissance des composantes d'intermodulation est décroissante en fonction de leur ordre (à puissance égale du signal d'entrée). Ainsi, le bruit de la mesure par rapport à la valeur réelle de la puissance de la composante d'intermodulation est minimisé pour les composantes d'intermodulation d'ordre faible.

Plus particulièrement, on attribue un poids plus important aux valeurs mesurées de la composante d'intermodulation d'ordre 3. En effet, les composantes d'intermodulation d'ordre faible sont les plus puissantes et parmi les composantes d'intermodulation d'ordre impair la composante d'intermodulation d'ordre 3 est la plus puissante.

Cependant, si l'on s'intéresse aux composantes d'intermodulation d'ordres élevés (par exemple 10, 11 et 12) on réalise uniquement des mesures de puissance sur l'une ou plusieurs de ces composantes qu'on approxime par une méthode conforme à l'invention pour obtenir une fonction prédictive f particulièrement fiable pour ces composantes d'intermodulation.

De même, on attribue avantageusement un poids plus important aux valeurs mesurées pour des puissances du signal d'entrée importantes qu'aux valeurs mesurées pour des puissances du signal d'entrée plus faibles, pour minimiser l'influence du bruit de la mesure.

Dans un procédé selon l'invention, la fonction prédictive f est donc utilisée pour calculer au moins une puissance d'intermodulation d'au moins une composante d'intermodulation de fréquence (d'ordre) distincte de la fréquence de la composante d'intermodulation dont les puissances d'intermodulation ont été mesurés pour fournir les valeurs mesurées sur lesquelles f a été approchée. Plus particulièrement un procédé selon l'invention permet d'obtenir toute la courbe de puissance d'intermodulation dans la plage de puissances d'entrée de fonctionnement du dispositif simulé.

Un procédé selon l'invention permet aussi de déterminer les puissances des composantes d'intermodulation lorsqu'un grand nombre de composantes de fréquences distinctes sont introduites en entrée du dispositif simulé, notamment un grand nombre de composantes porteuses. Plus particulièrement, dans un procédé selon l'invention, on évalue la puissance des puissances d'intermodulation dans une bande de fréquence particulière correspondant par exemple à une bande de réception dans un dispositif électronique émetteur/récepteur.

Avantageusement, un procédé selon l'invention est aussi caractérisé en ce que le dispositif simulé comprend au moins une antenne d'émission/réception en bande large.

En effet, un procédé selon l'invention est particulièrement avantageux pour des dispositifs électroniques de ce type car l'émission de signaux se fait à forte puissance par comparaison aux puissances de réception. Si l'émission est parasitée par des composantes d'intermodulation se trouvant dans la bande de réception, la réception de signaux est fortement bruitée.

Un procédé selon l'invention peut avantageusement être mis en oeuvre pour évaluer des puissances d'intermodulation de dispositifs électroniques passifs et de dispositifs électroniques actifs.

Avantageusement, dans un procédé selon l'invention, des données représentatives desdites valeurs mesurées sont enregistrées dans une mémoire.

Avantageusement, dans un procédé selon l'invention, un microprocesseur calcule des données représentatives desdites puissances d'intermodulation à partir de données représentatives d'une fonction prédictive f enregistrée en mémoire. Ledit microprocesseur enregistre en mémoire lesdites données représentatives desdites puissances d'intermodulation.

Avantageusement, dans un procédé selon l'invention, un microprocesseur détermine ladite fonction prédictive f à partir des données représentatives d'au moins deux valeurs mesurées. Notamment, ledit microprocesseur détermine ladite fonction prédictive f selon un procédé conforme à l'invention.

L'invention concerne également un procédé d'évaluation de puissance d'intermodulation dans un dispositif simulé caractérisé en combinaison par tout ou partie des caractéristiques mentionnées ci-dessus ou ci-après, y compris les caractéristiques de dispositif électronique selon l'invention.

L'invention concerne en outre un dispositif électronique adapté pour pouvoir mettre en oeuvre un procédé conforme à l'invention. Notamment l'invention concerne également un dispositif électronique d'évaluation prédictive de puissance d'intermodulation dans un dispositif simulé, dit dispositif simulé, ledit dispositif simulé comprenant au moins une entrée de signal et une sortie de signal.

Un dispositif électronique selon l'invention comprend avantageusement au moins une mémoire. Un dispositif électronique selon l'invention comprend aussi avantageusement au moins une unité de traitement de données ; par exemple un microprocesseur.

Avantageusement, un dispositif électronique selon l'invention est adapté pour enregistrer dans une mémoire des données représentatives des valeurs, dites valeurs mesurées, des puissances mesurées d'au moins une composante d'un signal, dit signal de sortie, produit par le dispositif simulé à une sortie du dispositif simulé à partir d'un signal d'entrée comprenant au moins deux composantes de fréquences distinctes et introduit à une entrée du dispositif simulé.

Avantageusement, ledit au moins un microprocesseur est adapté pour fournir de façon prédictive des données représentatives de valeurs de puissance, dites puissances d'intermodulation, d'au moins une composante, dite composante d'intermodulation, d'un signal de sortie, produite par une distorsion d'intermodulation entre au moins deux composantes du signal d'entrée à partir d'une fonction, dite fonction prédictive f, déterminée à l'aide d'au moins deux valeurs mesurées. Le dispositif est en outre adapté pour enregistrer en mémoire lesdites données représentatives de puissances d'intermodulation. Il est de plus adapté pour fournir lesdites données représentatives de puissances d'intermodulation sur une sortie et/ou sur un dispositif d'affichage.

Avantageusement et selon l'invention, ledit au moins un microprocesseur est adapté pour déterminer ladite fonction prédictive f à partir d'un modèle de fonction prédictive f enregistré en mémoire et d'au moins deux valeurs mesurées. Ledit dispositif comprend à cet effet des données enregistrées en mémoire, accessibles audit microprocesseur, et représentatives d'un programme permettant audit microprocesseur de déterminer la fonction prédictive f à partir d'un modèle mémorisé.

Plus particulièrement, ledit dispositif selon l'invention est adapté pour déterminer la valeur d'au moins un degré $q \in \{\mathbb{R}_+ - \mathbb{N}\}$ d'au moins un terme de la fonction Q en fonction d'au moins deux valeurs mesurées.

Avantageusement et selon l'invention, au moins une mémoire du dispositif selon l'invention comprend des données représentatives d'un modèle de fonction prédictive f selon lequel celle-ci comprend au moins une partie impaire V = F.G, formée de la multiplication

- d'une fonction impaire F,
- et d'une fonction G = $Q \circ g$ qui est la composée

  - d'une fonction g paire telle que g : $g : \mathbb{R} \to \mathbb{R}^+$ ,
  - par une fonction Q sous forme de série, dite série réelle, comprenant au moins un terme de degré q, avec $q \in \{\mathbb{R}_+ - \mathbb{N}\}$ .

Ledit programme est adapté pour qu'au moins un terme de degré q de la fonction Q soit déterminé à valeur dans $\{\mathbb{R}_+ - \mathbb{N}\}$ .

Avantageusement et selon l'invention, au moins une mémoire du dispositif selon l'invention comprend des données représentatives d'un modèle de fonction prédictive f selon lequel celle-ci comprend au moins une partie paire U additionnée à la partie impaire V, de sorte que la fonction prédictive f est de la forme f = U + V, avec U = $P \circ g$ qui est la composée

- d'une fonction g paire telle que $g : \mathbb{R} \to \mathbb{R}^+$ ,
- par une fonction P sous forme de série, dite série réelle, comprenant au moins un terme de degré $p \in \{\mathbb{R} - \{2n, n \in \mathbb{N}\}\}$ .

Rien n'empêche en outre qu'un dispositif électronique selon l'invention fournisse et injecte ledit signal d'entrée comprenant au moins deux composantes de fréquences distinctes à une entrée du dispositif simulé.

Rien n'empêche non plus qu'un dispositif électronique selon l'invention soit adapté pour réaliser une pluralité de mesures de puissance d'au moins une composante du signal de sortie afin de relever et enregistrer lesdites valeurs mesurées.

L'invention concerne également un dispositif électronique d'évaluation de puissance d'intermodulation dans un autre dispositif électronique, dit dispositif simulé, caractérisé en combinaison par tout ou partie des caractéristiques mentionnées ci-dessus ou ci-après, y compris les caractéristiques de procédé selon l'invention.

D'autres buts, caractéristiques et avantages de l'invention apparaîtront à la lecture de la description suivante donnée à titre non limitatif et qui se réfère aux figures annexées dans lesquelles :

- la figure 1 est une représentation schématique des étapes principales d'un procédé selon un mode de réalisation conforme à l'invention,
- la figure 2 est un diagramme de puissances d'intermodulation pour plusieurs composantes d'intermodulation d'ordre impair, mesurées et modélisées par un procédé de l'état de la technique,
- la figure 3 est un diagramme de puissances d'intermodulation pour plusieurs composantes d'intermodulation d'ordre impair, mesurées et modélisées par des fonctions prédictives d'intermodulation d'ordres impair obtenues conformément à un procédé selon l'invention, les valeurs mesurées étant les mêmes qu'en figure 2,
- les figures 4a et 4b sont des diagrammes représentatif des valeurs et des zéros de plusieurs fonctions prédictives d'intermodulation (ou transformées de Tchebychev), respectivement d'ordres pairs à la figure 4a et d'ordres impairs à la figure 4b, pour une fonction prédictive f conforme à l'invention, polynomiale réelle à un terme, lesdits diagrammes étant tracés en fonction du degré du terme du polynôme réel.

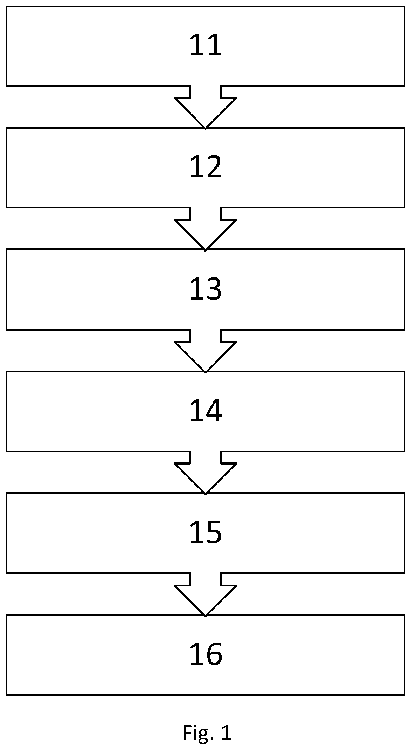

Dans un procédé selon l'invention, comme représenté en figure 1, un signal d'entrée comprenant deux composantes de fréquences distinctes est introduit en entrée d'un dispositif électronique non-linéaire, dit dispositif simulé.

Ainsi, dans une première étape lion introduit, en entrée du dispositif simulé, un signal d'entrée de la forme :

$$Se(t) = a1.cos(\omega 1 t + \varphi 1) + a2.cos(\omega 2 t + \varphi 2)$$

où t est la variable du temps

a1 et a2 les amplitudes maximales de chaque composante d'entrée,

$\omega$1 et $\omega$2 les pulsations de chaque composante d'entrée,

$\varphi$1 et $\varphi$2 les déphasages de chaque composante d'entrée,

Les fréquences $f1 = \omega1/2\pi$ et $f2 = \omega2/2\pi$ sont choisies dans la bande passante du dispositif simulé.

Afin de réaliser des mesures de la puissance du signal d'entrée injecté en entrée du dispositif simulé, on mesure la puissance émise par un ou plusieurs émetteurs générant le signal d'entrée. Ainsi, toutes les connexions, filtres, liaisons guidées, et antennes éventuellement interposés entre les émetteurs générant le signal d'entrée et le dispositif simulé sont pris en compte et considérés comme parties du dispositif simulé.

Dans une deuxième étape 12 on réalise des mesures de puissances en sortie du dispositif simulé. Ces mesures sont réalisées à la fréquence des composantes d'intermodulation.

On réalise les mesures pour une ou plusieurs composante(s) d'intermodulation.

A titre d'exemple, un procédé conforme à l'invention de modélisation d'un dispositif électronique non-linéaire et de prévision des puissances de composantes d'intermodulation produites par ce dispositif est présenté pour des composantes d'intermodulation d'ordre impair. On réalise donc les mesures pour une ou plusieurs composante(s) d'intermodulation d'ordre impair.

Plus particulièrement, on réalise des mesures sur une seule composante d'intermodulation de chaque ordre. Pour un ordre donné de composante d'intermodulation, on réalise des mesures sur la composante d'intermodulation située du côté de la bande de réception du dispositif simulé par rapport aux fréquences f1 et f2.

Par exemple, on réalise les mesures pour une composante d'ordre 3 choisie en fonction de la position de ladite bande de réception. Ainsi, si la bande de réception du(des) récepteur(s) du dispositif simulé est située dans des fréquences supérieures à f2, on réalise des mesures sur IM3(1,2)=2f2-f1. Si au contraire, la bande de réception du(des) récepteur(s) du dispositif simulé est située dans des fréquences inférieures à f1, on réalise des mesures sur IM3(2,1)=2f1-f2.

Les mesures sont réalisées à l'aide d'un analyseur de spectre, d'un filtre et d'un bolomètre ou d'un analyseur spécifique de produits d'intermodulation passifs. Elles permettent d'obtenir des valeurs mesurées telles que des amplitudes maximales de chaque composante d'intermodulation mesurée, lesdites amplitudes correspondant à des puissances desdites composantes d'intermodulation.

Afin de réaliser des mesures de la puissance du signal de sortie émis en sortie du dispositif simulé, on mesure la puissance reçue par un ou plusieurs récepteurs de réception du signal de sortie du dispositif simulé. Ainsi, toutes les connexions, filtres, liaisons guidées, et antennes éventuellement interposés entre le dispositif simulé et les récepteurs de réception du signal de sortie sont pris en compte et considéré comme parties du dispositif simulé.

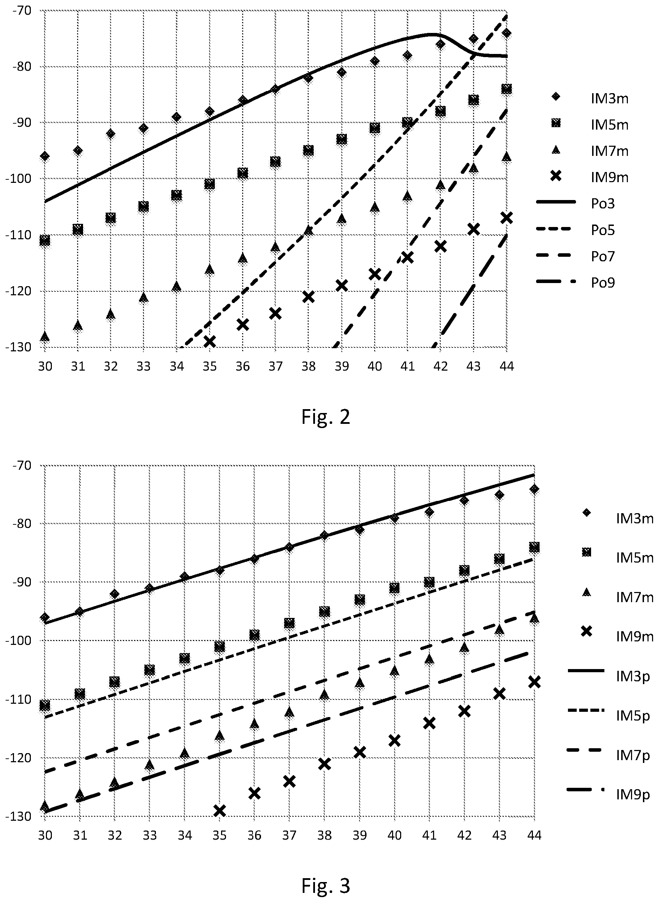

Les valeurs mesurées des puissances des composantes d'intermodulation d'ordre 3, 5, 7 et 9 d'un dispositif électronique non-linéaire sont représentées aux figures 2 et 3 sous les légendes IM3m, IM5m, IM7m et IM9m. Celles-ci sont représentées en dBm avec en abscisses les puissances du signal d'entrée en dBm.

Un dispositif électronique non-linéaire actif présente deux régimes : un premier régime sensiblement linéaire à basse puissance du signal d'entrée, et un second régime de saturation pour des puissances plus élevées.

Un dispositif électronique non-linéaire passif ne présente pas de régime de saturation.

Dans une troisième étape 13, on calcule la pente moyenne des valeurs mesurées. Dans l'exemple présenté, on obtient, conformément aux figures 2 et 3, des pentes moyennes répertoriées dans le tableau suivant :

| Ordre de la composante d'intermodulation | IM3 | IM5 | IM7 | IM9 |
|---|---|---|---|---|
| Pente mesurée | 1,6 | 1,9 | 2,3 | 2,5 |

Dans une quatrième étape 14, on choisit un modèle de fonction prédictive f tel que comprenant une partie impaire V de la forme

$$V = F.(Q \circ g)$$

avec g la fonction module,

avec $Q : u \rightarrow \alpha.u^{q\alpha} + \beta.u^{q\beta}, \ \forall u \in \mathbb{R}_+$

et avec comme fonction F la fonction signe, de sorte que :

$$V : u \rightarrow sign(u).\left[\alpha.|u|^{q\alpha} + \beta.|u|^{q\beta}\right], \qquad \forall u \in \mathbb{R}$$

avec $q\alpha$ et $q\beta$ des coefficients réels, l'un au moins n'étant pas un entier.

Pour une telle partie impaire V de la fonction prédictive f, on peut déterminer les transformées de Tchebychev de manière analytique. La fonction prédictive d'intermodulation $f_m$ d'ordre m (transformée de Tchebychev d'ordre m de la partie impaire V de la fonction prédictive f) est :

$$f_m(a) = 2sign(a).\left(\frac{|a|}{2}\right)^{q\alpha} \frac{\Gamma(q\alpha + 1)}{\Gamma\left(\frac{q\alpha + m}{2} + 1\right).\Gamma\left(\frac{q\alpha - m}{2} + 1\right)}$$

$$+ 2sign(a).\left(\frac{|a|}{2}\right)^{q\beta} \frac{\Gamma(q\beta + 1)}{\Gamma\left(\frac{q\beta + m}{2} + 1\right).\Gamma\left(\frac{q\beta - m}{2} + 1\right)}$$

$$, \ \forall \, m \in \{2n + 1, n \in \mathbb{N}\}$$

Puis on choisit une valeur de départ pour $q\alpha$ et $q\beta$, par exemple proches de la pente moyenne des valeurs mesurées d'une composante d'intermodulation. Les valeurs de départ des degrés $q\alpha$ et $q\beta$ appartiennent avantageusement à l'ensemble des réels non-entiers.

Les valeurs de départ des degrés $q\alpha$ et $q\beta$ peuvent aussi être choisis dans une table, par exemple en fonction de la nature du dispositif simulé et/ou du/des matériau(x) le constituant. Ainsi, les valeurs de départ des degrés $q\alpha$ et $q\beta$ peuvent être choisies sans aucune mesure préalable sur un dispositif simulé, uniquement en fonction des caractéristiques techniques dudit dispositif simulé. En effet, les degrés $q\alpha$ et $q\beta$ sont représentatifs du comportement physique du dispositif simulé, or la non-linéarité du dispositif simulé dépend essentiellement de sa nature, des matériaux le constituant et, le cas échéant, de la qualité de ses contacts électriques. Par exemple, le comportement non-linéaire d'une antenne de radiocommunication dépend principalement du matériau dans lequel sa partie réflective est réalisée (métallique, composite (fibres de carbone à mats selon trois directions par exemple), etc.).

Dans l'exemple présenté on choisit par exemple $q\alpha \simeq 1{,}6$ et $q\beta \simeq 2{,}0$ comme valeurs de départ.

Des valeurs de départ des coefficients $\alpha$ et $\beta$ sont aussi choisies.

Dans une cinquième étape 15, on ajuste les coefficients $\alpha$ et $\beta$ et les degrés $q\alpha$ et $q\beta$ en réalisant au moins une approximation de l'un des jeux de valeurs mesurées correspondant aux valeurs de puissance d'intermodulation de l'une des composantes d'intermodulation.

Dans l'exemple présenté, on cherche à déterminer de façon fiable les puissances des premières composantes d'intermodulation d'ordre impair. On approche donc les valeurs mesurées de la composante d'intermodulation d'ordre 3 par la fonction prédictive d'intermodulation $f_3$ d'ordre 3.

On réalise par exemple cette approximation par une régression linéaire selon la méthode dite "des moindres carrés" dans laquelle l'erreur quadratique des prévisions faites par la fonction prédictive f est minimisée par une méthode de suivi du gradient. Cette méthode permet de déterminer les valeurs des coefficients $\alpha$ et $\beta$ et des degrés $q\alpha$ et $q\beta$ de Q.

Une telle méthode peut être menée analytiquement dans le cas d'une fonction Q et donc d'une fonction prédictive f à partie impaire simple. Sinon, une méthode par simulation peut être mise en oeuvre, par exemple en utilisant un polynôme réel de variable $X^{1/10}$ permettant de réaliser l'approximation des degrés $q\alpha$ et $q\beta$ par pas de 1/10.

On détermine ainsi la partie impaire V de la fonction prédictive f en déterminant les valeurs des coefficients et des degrés de Q :

| $\alpha$ | $\beta$ | $q\alpha$ | $q\beta$ |
|---|---|---|---|
| 1 | -0,2 | 2 | 2,5 |

Dans une sixième étape 16, on détermine théoriquement les puissances des composantes d'intermodulation pour toute puissance du signal d'entrée, et pour d'autres composantes d'intermodulation d'ordre impair à l'aide des fonctions prédictives d'intermodulation $f_m$ avec m impair.

Dans l'exemple présenté on évalue de façon prédictive les puissances d'intermodulation de la composante d'intermodulation d'ordre 3 pour toute puissance du signal d'entrée, ainsi que celles des composantes d'intermodulation d'ordres 5, 7 et 9.

Le résultat de ces évaluations selon un procédé conforme à l'invention est représenté à la figure 3 sous les légendes IM3p, IM5p, IM7p et IM9p. On s'aperçoit que le modèle est particulièrement fiable et précis, notamment pour les composantes d'intermodulation d'ordres 3, 5 et 7. La fonction prédictive f est donc proche de la fonction de transfert réelle du dispositif simulé, au moins pour les composantes d'intermodulation d'ordre impair (c'est-à-dire qu'au moins la partie impaire V est fiable).

On constate aussi que les évaluations obtenues par un procédé conforme à l'invention ne divergent pas au-delà de la plage de puissances du signal d'entrée dans laquelle les mesures des puissances d'intermodulation ont été effectuées.

Ainsi, on obtient effectivement, dans la plage de mesures effectuées :

| Ordre de la composante d'intermodulation | IM3 | IM5 | IM7 | IM9 |
|---|---|---|---|---|
| Pente mesurée | 1,6 | 1,9 | 2,3 | 2,5 |
| Pente évaluée par une fonction de l'état de la technique antérieure (fig.2) | 1,81 | 3.92 | 5.81 | 9 |
| Pente évaluée par la fonction prédictive f (fig.3) | 1,82 | 1,93 | 1,95 | 1,96 |

Les courbes des évaluations réalisées selon une méthode conventionnelle antérieure à l'invention pour les composantes d'intermodulation d'ordre 3, 5, 7 et 9 sont représentées à la figure 2 sous les légendes Po3, Po5, Po7, Po9. Pour cette modélisation, un simple polynôme classique (à termes de degré entier) est utilisé à titre de fonction prédictive. Une telle modélisation ne correspond pas au comportement réel du circuit et ne permet pas de le modéliser et d'évaluer de façon prédictive les puissances d'intermodulation de façon fiable. En effet, on observe une incohérence entre la pente moyenne de la modélisation et la pente moyenne des valeurs mesurées pour chaque ordre d'intermodulation. De plus, la modélisation est rendue artificiellement proche des valeurs mesurées de la composante d'intermodulation d'ordre 3, ce qui entraîne une perte de précision telle, sur les ordres suivants (5, 7 et 9) que les résultats sont en fait inexploitables. En outre, on observe qu'une telle modélisation diverge rapidement au-delà de la plage de puissance du signal d'entrée pour laquelle les mesures ont été réalisées.

Un procédé d'évaluation prédictive selon l'invention est particulièrement avantageux pour déterminer des spécifications techniques de dispositif électroniques, notamment pour des dispositifs fonctionnant avec plus de deux porteuses.

En effet, pour un dispositif électronique prévu pour fonctionner par exemple avec 8 porteuses, les spécifications techniques sont généralement calculées pour répondre à des valeurs mesurées avec deux porteuses en signal d'entrée car il est plus facile et moins coûteux de réaliser des mesures sur un signal d'entrée à deux porteuses. Les mesures sont réalisées avec des puissances de chaque porteuse identique à leur puissance nominale dans le dispositif en fonctionnement (à 8 porteuses par exemple).

Dès lors la puissance totale du signal d'entrée lors de telles mesures est très inférieure à la puissance totale en fonctionnement. Or Les spécifications portent généralement sur un ratio de puissance entre la puissance d'une composante du signal d'entrée (porteuse) et la puissance d'une composante d'intermodulation, ledit ratio étant noté C/I, en particulier $C/I_3$ pour une composante d'intermodulation d'ordre 3. Dès lors la spécification du ratio C/I pour un signal d'entrée à deux porteuses doit être calculé à partir de la spécification du ratio C/I attendu pour un signal à 8 porteuses (toujours selon le même exemple).

Or le comportement des dispositifs électronique étant imparfaitement simulé par des fonctions de l'état de la technique antérieure, cela résultait en des spécifications techniques à deux porteuse comprenant des ratios C/I très élevés ; en fait plus élevés que nécessaire, ce qui entraîne des coûts de fabrication très élevés. En effet, des dispositifs de meilleure qualité, réalisés avec des matériaux plus coûteux, sont requis pour répondre à de telles spécifications obtenues par des méthodes antérieures à l'invention (degrés entiers et donc pentes entières).

Par un procédé selon l'invention, dans lequel au moins un degré est réel non-entier (donc la pente est réelle non-entière) la simulation d'un dispositif électronique est plus fiable, de sorte que la spécification technique sur le ratio C/I à deux porteuses est différente. Un procédé selon l'invention permet donc d'ajuster au mieux la spécification technique au comportement réel attendu du dispositif en fonctionnement - à 8 porteuses par exemple.

Le tableau suivant montre la spécification à deux porteuses qu'il est nécessaire de demander pour obtenir une même performance de 115 dB à 8 porteuses en fonction de la pente en dB/dB (ou degré) en fonction de la puissance d'entrée mesurée à deux porteuses.

La référence est le cas classique donné par un procédé conforme à l'état de la technique dans lequel un polynôme de degré 3 est utilisé pour simuler le comportement du dispositif vis-à-vis d'une composante d'intermodulation d'ordre 3.

| Modèle utilisé | Degré de la fonction Q (pente en dB/dB) | Performance C/I$_3$ demandée à 8 porteuses (dB) | Spécification C/I$_3$ demandée à 2 porteuses (dB) | Relaxation de la spécification par rapport à la référence (dB) |
|---|---|---|---|---|
| Invention | 1,5 | 115 | 108,3 | 12,7 |
| Invention | 2 | 115 | 112,5 | 8,5 |
| Invention | 2,5 | 115 | 116,7 | 4,3 |
| État de la technique | 3 | 115 | 121 | 0 |
| Invention | 3,5 | 115 | 125,4 | -4,4 |

Ainsi, dans le cas où le comportement du dispositif simulé vis-à-vis d'une composante d'intermodulation d'ordre 3 pourrait être simulé de façon fiable par une fonction prédictive f de degré 2,5, on s'aperçoit qu'une évaluation prédictive effectuée avec un procédé conforme à l'état de la technique (de degré 3) amènerait à spécifier une exigence de 4,3dB supérieure aux spécifications calculées par un procédé conforme à l'invention. L'invention permet donc des économies importantes pour les fabricants de tels dispositifs électroniques.

Ainsi, les inventeurs se sont aperçus que, dans certains cas, une antenne en matériau composite à fibres de carbone à trois mats déposés selon trois directions principales à 120° les uns des autres, donc de qualité moindre mais aussi de coût bien inférieur qu'une antenne métallique, soumise un test à deux porteuse, répond à des spécifications techniques réévaluées par un procédé conforme à l'invention, alors qu'elles auraient été refusées par des spécifications techniques obtenues par un procédé de l'état de la technique antérieure. En effet, ils ont déterminé que le comportement d'une telle antenne est parfaitement modélisé par une fonction prédictive f comprenant un terme de degré compris entre 2,2 et 2,3. Cela permet de la sorte de relaxer la spécification attendue dans un test à deux porteuses de 6 à 7 dB par rapport à une modélisation réalisée avec une fonction comparative h de degré 3 de l'état de la technique. De telles antennes en matériau composite présentent par ailleurs d'autres avantages tels qu'une meilleure résistance mécanique, et une plus grande légèreté qui sont des propriétés très importantes par exemple pour les satellites, ou sur des antennes de télécommunications terrestres.

A contrario, la dernière ligne indique que lorsque le comportement du dispositif simulé vis-à-vis d'une composante d'intermodulation d'ordre 3 est mieux simulé par une fonction prédictive f de degré 3,5 que par une fonction de degré entier égal à 3, les spécifications techniques sur le ratio C/I$_3$ à deux porteuses devraient être plus exigeantes, de sorte que les dispositifs dimensionnés conformément à des prévisions obtenues par des méthodes de l'état de la technique ne fonctionneraient pas de façon optimale en fonctionnement normal à 8 porteuses.

Par ailleurs, afin d'évaluer de façon prédictive les puissances d'intermodulation des composante d'intermodulation d'ordres pairs, le procédé selon l'invention décrit ci-avant (étapes 11 à 16) peut être renouvelé avec les composantes d'intermodulation d'ordre pair. A la quatrième étape 14, on choisit par exemple une partie paire U de la fonction prédictive f de la forme U = $P \circ g$, avec g la fonction module,

$$P: u \to \gamma . u^{p\gamma} + \delta . u^{p\delta}, \forall u \in \mathbb{R}_+,$$

de sorte que :

$$U: u \to \gamma . |u|^{p\gamma} + \delta . |u|^{p\delta}, \forall u \in \mathbb{R}$$

La transformée de Tchebychev d'ordre m de la partie paire U de la fonction prédictive f est :

$$f_m(a) = 2\left(\frac{|a|}{2}\right)^{p\gamma} \frac{\Gamma(p\gamma + 1)}{\Gamma\left(\frac{p\gamma + m}{2} + 1\right).\Gamma\left(\frac{p\gamma - m}{2} + 1\right)}$$

$$+2\left(\frac{|a|}{2}\right)^{p\delta} \frac{\Gamma(p\delta + 1)}{\Gamma\left(\frac{p\delta + m}{2} + 1\right).\Gamma\left(\frac{p\delta - m}{2} + 1\right)}, \ \forall \, m \in \{2n, n \in \mathbb{N}\}$$

Puis les coefficients $\gamma$ et $\delta$ et les degrés p$\gamma$ et p$\delta$ sont déterminés par une méthode d'approximation des valeurs mesurées identiques à la méthode utilisée pour la partie impaire V. Les valeurs de départ de p$\gamma$ et p$\delta$ sont par contre choisis dans l'ensemble des réels à l'exclusion des entiers pairs.

Ainsi, un procédé selon l'invention permet aussi de déterminer les puissances des produits d'intermodulation d'ordre pair.

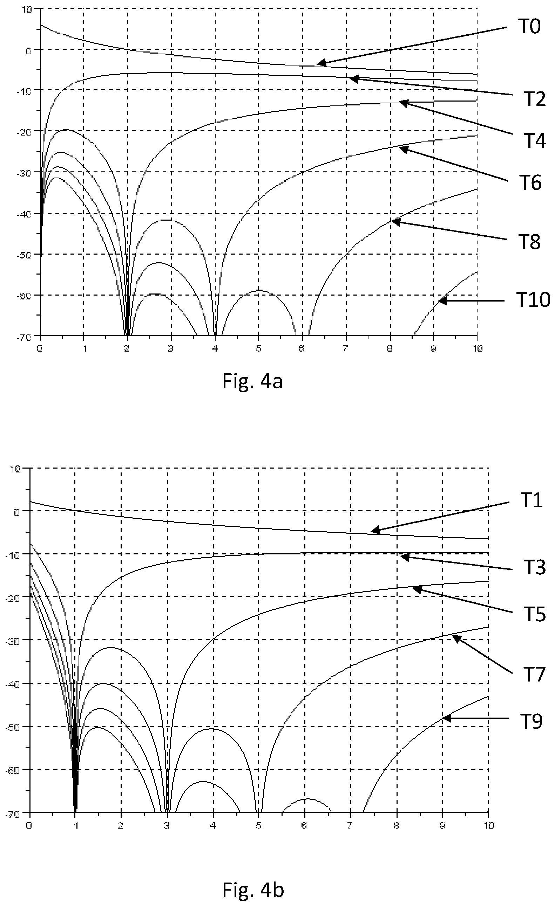

Les puissances des composantes d'intermodulation respectivement paires et impaires sont représentées aux figures 4a et 4b en fonction des degrés $p \in \mathbb{R}$ et $q \in \mathbb{R}$, en abscisses, pour une fonction prédictive f simple de la forme :

$$f: u \to |u|^p + sign(u).|u|^q, \forall \, u \in \mathbb{R},$$

la partie paire de f étant :

$$U: u \to |u|^p, \forall \, u \in \mathbb{R},$$

qui permet d'obtenir la figure 4a,
la partie impaire de f étant :

$$V: u \to sign(u).|u|^q, \forall \, u \in \mathbb{R},$$

qui permet d'obtenir la figure 4b.

Les courbes de la figure 4a correspondent aux fonctions prédictives d'intermodulation d'ordre pair (de 0 à 10) qui sont les transformées de Tchebychev d'ordre pair (respectivement de 0 à 10) de cette fonction paire U. Elles sont représentées sous les légendes T0, T2, T4, T6, T8 et T10.

Les courbes de la figure 4b correspondent aux fonctions prédictives d'intermodulation d'ordre impair (de 1 à 9) qui sont les transformées de Tchebychev d'ordre impair (respectivement de 1 à 9) de cette fonction impaire V. Elles sont représentées sous les légendes T1, T3, T5, T7, et T9.

Ainsi, on observe que pour tout p entier pair (respectivement q entier impair), on retrouve un cas classique dans lequel seules les composantes d'intermodulation d'ordre pair inférieur ou égal à p (respectivement d'ordre impair inférieur ou égal à q) peuvent être évaluées car non-nulles. Ainsi par exemple, on observe que pour q = 5, seuls les composantes d'intermodulation d'ordre 1, 3 et 5 prennent une valeur différente de zéro.

En revanche, on observe que lorsque p est un réel qui n'est pas un entier pair $(p \in \{\mathbb{R}_+ - \{2n\}\}, n \in \mathbb{N})$, la partie paire U de f permet de calculer les puissances de l'ensemble des produits d'intermodulation d'ordre pair.

De même, au moins l'un des degrés q étant un réel non-entier $(q \in \{\mathbb{R}_+ - \mathbb{N}\})$, la partie impaire V de f permet de calculer simplement et de façon fiable les puissances de l'ensemble des produits d'intermodulation d'ordre impair.

Dans un procédé selon l'invention, il suffit donc qu'un seul terme de la partie paire U (respectivement impaire V) de f de la forme série réelle ou polynomiale réelle, soit de degré réel non-entier-pair (respectivement réel non-entier) pour que toutes les composantes d'intermodulation d'ordre pair (respectivement impair) puissent être évaluées, quel que soit leur ordre et quel que soit la valeur du degré dudit terme.

Ainsi par exemple, on observe que pour q = 2 ou q = 2,5 tous les produits d'intermodulation d'ordre impair sont non-nuls (ordres 1, 3, 5, 7 et 9 représentés en figure 4b). De même, pour p=2,5 ou p=3 tous les produits d'intermodulation d'ordre pair sont non-nuls (ordres 0, 2, 4, 6, 8 et 10 représentés en figure 4a).

L'invention peut faire l'objet de nombreuses autres variantes de réalisation.

Ainsi d'autres fonctions impaires peuvent être utilisées à la place de la fonction signe. Notamment une fonction tangente hyperbolique de la forme tanh(ku) ou u est la variable et k un réel choisi de grande valeur absolue, peut être utilisée. L'avantage de la fonction tangente hyperbolique est sa continuité sur l'ensemble des réels $\mathbb{R}$.

En outre, une fonction g distincte de la fonction module peut être choisie parmi les fonctions paires à valeurs positives dans $\mathbb{R}$.

Ainsi, rien n'empêche de remplacer les parties paire $U = P \circ g$ et/ou impaire $V = F. (Q \circ g)$ par d'autres fonctions.

**Revendications**

**1.** - Procédé mis en oeuvre par microprocesseur d'évaluation prédictive de puissance d'intermodulation dans un dispositif électronique non-linéaire, le procédé permettant d'obtenir une fonction prédictive f représentative du comportement réel du dispositif électronique, le dispositif électronique comprenant au moins une entrée de signal et une sortie de signal,

le procédé comprenant les étapes suivantes :

- introduire un signal d'entrée comprenant au moins deux composantes de fréquences distinctes à une entrée du dispositif électronique,
- mesurer des valeurs représentatives d'au moins une puissance d'au moins une composante d'un signal de sortie produit par le dispositif électronique à une sortie du dispositif électronique à partir dudit signal d'entrée,
- déterminer ladite fonction prédictive f à l'aide d'au moins deux desdites valeurs mesurées,

**caractérisé en ce qu'**il comprend en outre l'étape suivante :

- évaluer de façon prédictive, par une transformée de Tchebychev d'au moins une partie de ladite fonction f, des valeurs de puissance d'intermodulation d'au moins une composante d'intermodulation d'ordre impair dudit signal de sortie produite par une distorsion d'intermodulation entre lesdites au moins deux composantes du signal d'entrée,

ladite au moins une composante d'intermodulation de fréquences étant distincte de celles sur lesquelles les valeurs mesurées ont été mesurées,
et **en ce que** :
la fonction prédictive f comprend au moins une partie impaire V = F G, formée de la multiplication

• d'une fonction impaire F,
• et d'une fonction G = $Q \circ g$ qui est la composée

▪ d'une fonction g paire telle que g : $g : \mathbb{R} \to \mathbb{R}^+$,
▪ par une fonction polynomiale réelle Q sous forme de série comprenant au moins un terme de degré q, avec $q \in \{\mathbb{R}_+ - \mathbb{N}\}$

**2.** - Procédé selon la revendication 1, **caractérisé en ce que** la fonction F est la fonction signe qui attribue son signe à tout élément de $\mathbb{R}$ :

$$F : u \to sign(u), \forall\, u \in \mathbb{R}.$$

**3.** - Procédé selon la revendication 1, **caractérisé en ce que** la fonction F est une fonction tangente hyperbolique de la forme :

$$F : u \rightarrow tanh(ku), k \in \mathbb{R}, \forall\, u \in \mathbb{R}\,.$$

**4.** - Procédé selon l'une des revendications 1 à 3, **caractérisé en ce que** la fonction g est la fonction module g telle que :

$$g : u \rightarrow |u|, \forall\, u \in \mathbb{R}.$$

**5.** - Procédé selon l'une des revendications 1 à 4, **caractérisé en ce que** la fonction prédictive f comprend en outre une partie paire U additionnée à la partie impaire V, de sorte que la fonction prédictive f est de la forme f = U + V, avec U = $P \circ$ g qui est la composée

- d'une fonction g paire telle que $g : \mathbb{R} \rightarrow \mathbb{R}^+$ ,
- par une fonction P sous forme de série, dite série réelle, comprenant au moins un terme de degré $p \in \{\mathbb{R} - \{2n, n \in \mathbb{N}\}\}$ .

**6.** - Procédé selon la revendication 5, **caractérisée en ce que** la fonction P est un polynôme, dit polynôme réel, comprenant au moins un terme de degré p, avec $p \in \{\mathbb{R}_+ - \{2n, n \in \mathbb{N}\}\}$ .

**7.** - Procédé selon l'une des revendications 1 à 6, **caractérisé en ce que** les valeurs mesurées comprennent une pluralité de valeurs de puissances d'intermodulation mesurées sur une même composante d'intermodulation

**8.** - Procédé selon l'une des revendications 1 à 7, **caractérisé en ce que** la fonction prédictive f est au moins partiellement déterminée par approximation d'au moins deux valeurs mesurées représentatives de puissances d'intermodulation d'une même composante d'intermodulation, par une transformée de Tchebychev de la fonction prédictive f.

**9.** - Procédé selon l'une des revendications 1 à 8, **caractérisé en ce que** le dispositif simulé comprend au moins une antenne d'émission/réception en bande large.

**10.** - Dispositif électronique adapté pour pouvoir mettre en oeuvre un procédé conforme à l'une des revendications 1 à 9.


**Patentansprüche**

**1.** Mikroprozessorimplementiertes Verfahren für die Vorhersagebewertung der Intermodulationsleistung in einer nichtlinearen elektronischen Vorrichtung, wobei das Verfahren es ermöglicht, eine Vorhersagefunktion zu erhalten, die repräsentativ für das tatsächliche Verhalten der elektronischen Vorrichtung ist,

wobei die elektronische Vorrichtung mindestens einen Signaleingang und einen Signalausgang umfasst, wobei das Verfahren die folgenden Schritte umfasst:

- Eingeben eines Eingangssignals, das mindestens zwei unterschiedliche Frequenzkomponenten umfasst, an einem Eingang der elektronischen Vorrichtung,
- Messen repräsentativer Werte mindestens einer Leistung mindestens einer Komponente eines Ausgangssignals, das von der elektronischen Vorrichtung an einem Ausgang der elektronischen Vorrichtung aus dem Eingangssignal erzeugt wird,
- Bestimmen der Vorhersagefunktion f unter Verwendung von mindestens zwei der Messwerte,

**dadurch gekennzeichnet, dass** es außerdem den folgenden Schritt umfasst:

- voraussagendes Bewerten von Intermodulationsleistungswerten von mindestens einer Intermodulationskomponente ungerader Ordnung des Ausgangssignals, die durch eine Verzerrungsintermodulation zwischen den mindestens zwei Komponenten des Eingangssignals erzeugt wird, durch eine Tschebyscheff-Transformation von mindestens einem Teil der Funktion f,

wobei sich mindestens eine Frequenzintermodulationskomponente von denen unterscheidet, an denen die Messwerte gemessen wurden,
und dadurch, dass:
die Vorhersagefunktion f mindestens einen ungeraden Teil V = F.G umfasst, gebildet aus der Multiplikation

• einer ungeraden Funktion F
• und einer Funktion G = $Q \circ g$, die zusammengesetzt ist aus

▪ einer geraden Funktion g, so dass $g \colon \mathbb{R} \to \mathbb{R}^+$ ,
▪ durch eine reelle Polynomfunktion Q in Form einer Reihe, die mindestens einen Term des Grades q umfasst, wobei $q \in \{\mathbb{R}_+ - \mathbb{N}\}$ .

2. Verfahren nach Anspruch 1, **dadurch gekennzeichnet, dass** die Funktion F die Vorzeichenfunktion ist, die jedem Element von $\mathbb{R}$ ihr Vorzeichen zuordnet:

$$F : u \to sign(u), \forall\, u \in \mathbb{R}$$

3. Verfahren nach Anspruch 1, **dadurch gekennzeichnet, dass** die Funktion F eine hyperbolische Tangensfunktion der Form ist:

$$F : u \to tanh(ku), k \in \mathbb{R}, \forall\, u \in \mathbb{R}$$

4. Verfahren nach einem der Ansprüche 1 bis 3, **dadurch gekennzeichnet, dass** die Funktion g die Modulfunktion g ist, so dass:

$$g : u \to |u|, \forall\, u \in \mathbb{R}.$$

5. Verfahren nach einem der Ansprüche 1 bis 4, **dadurch gekennzeichnet, dass** die Vorhersagefunktion f ferner einen geraden Teil U umfasst, der zum ungeraden Teil V addiert wird, so dass die Vorhersagefunktion die Form f = U + V hat, wobei U = $P \circ g$ , zusammengesetzt aus

- einer geraden Funktion g, so dass $\mathbb{R} \to \mathbb{R}^+$ ,
- durch eine Funktion P in Form einer Reihe, einer sogenannten reellen Reihe, die mindestens einen Term des Grads $p \in \{\mathbb{R} - \{2n, n \in \mathbb{N}\}\}$ umfasst.

6. Verfahren nach Anspruch 5, **dadurch gekennzeichnet, dass** die Funktion P ein Polynom ist, ein sogenanntes reelles Polynom, das mindestens einen Term des Grads p umfasst, mit $p \in \{\mathbb{R}_+ - \{2n, n \in \mathbb{N}\}\}$ .

7. Verfahren nach einem der Ansprüche 1 bis 6, **dadurch gekennzeichnet, dass** die Messwerte mehrere an derselben Intermodulationskomponente gemessene Intermodulationsleistungswerte umfassen.

8. Verfahren nach einem der Ansprüche 1 bis 7, **dadurch gekennzeichnet, dass** die Vorhersagefunktion f zumindest teilweise durch Approximation von mindestens zwei Messwerten, die für Intermodulationsleistungen derselben Intermodulationskomponente repräsentativ sind, durch eine Tschebyscheff-Transformation der Vorhersagefunktion f bestimmt wird.

9. Verfahren nach einem der Ansprüche 1 bis 8, **dadurch gekennzeichnet, dass** die simulierte Vorrichtung mindestens eine breitbandige Sende-/Empfangsantenne umfasst.

10. Elektronische Vorrichtung, die dazu geeignet ist, ein Verfahren nach einem der Ansprüche 1 bis 9 durchzuführen.

**Claims**

1. A microprocessor implemented method for predictive evaluation of intermodulation power in a non-linear electronic device, the method allowing to obtain a predictive function f representative of the actual behavior of the electronic device,

> the electronic device comprising at least one signal input and one signal output,
> the method comprising the following steps:

>> - introducing an input signal comprising at least two distinct frequency components at an input of the electronic device,
>> - measuring values representative of at least one power of at least one component of an output signal produced by the electronic device at an output of the electronic device from said input signal,
>> - determining said predictive function f by means of at least two of said measured values,

> **characterized in that** it further comprises the following step:

>> - predictively evaluating, by a Chebyshev transform of at least part of said function f, intermodulation power values of at least one odd-order intermodulation component of said output signal produced by an intermodulation distortion between said at least two components of the input signal,

> said at least one frequency intermodulation component being distinct from those on which the measured values were measured,
> and **in that**:
> the predictive function f comprises at least one odd part V = F.G, formed from the multiplication

>> • of an odd function F,
>> • and of a function G = Q ° g which is the composite

>>> ■ of an even function g such that $g: \mathbb{R} \to \mathbb{R}^+$ ,
>>> ■ by a real polynomial function Q in the form of a series comprising at least one term of degree q, with
>>> $q \in \{\mathbb{R}_+ - \mathbb{N}\}$

2. The method according to claim 1, **characterized in that** the function F is the sign function which assigns its sign to any element of $\mathbb{R}$:

$$F: u \to sign(u), \forall u \in \mathbb{R}.$$

3. The method according to claim 1, **characterized in that** the function F is a hyperbolic tangent function of the form:

$$F: u \to \tanh(ku), k \in \mathbb{R}, \forall u \in \mathbb{R}.$$

4. The method according to any of claims 1 to 3, **characterized in that** the function g is the modulus function g such that:

$$g: u \to |u|, \forall u \in \mathbb{R}.$$

5. The method according to any of claims 1 to 4, **characterized in that** the predictive function f further comprises an even part U added to the odd part V, so that the predictive function f is of the form f = U + V, with U = $P°g$ which is the composite

> - of an even function g such that g: $g: \mathbb{R} \to \mathbb{R}^+$ ,
> - by a function P in the form of a series, called a real series, comprising at least one term of degree
> $p \in \{\mathbb{R} - \{2n, n \in \mathbb{N}\}\}$ .

6. The method according to claim 5, **characterized in that** the function P is a polynomial, called a real polynomial, comprising at least one term of degree p, with $p \in \left\{ \mathbb{R}_+ - \{2n, n \in \mathbb{N}\} \right\}$.

7. The method according to any of claims 1 to 6, **characterized in that** the measured values comprise a plurality of intermodulation power values measured on the same intermodulation component.

8. The method according to any of claims 1 to 7, **characterized in that** the predictive function f is at least partially determined by approximation of at least two measured values representative of intermodulation powers of the same intermodulation component, by a Chebyshev transform of the predictive function f.

9. The method according to any of claims 1 to 8, **characterized in that** the simulated device comprises at least one broadband transmitting/receiving antenna.

10. An electronic device adapted to be able to implement a method according to any of claims 1 to 9.

```
┌─────────────────────────────────────┐
│                                     │
│                 11                  │
│                                     │
└─────────────────────────────────────┘
                    ▼
┌─────────────────────────────────────┐
│                                     │
│                 12                  │
│                                     │
└─────────────────────────────────────┘
                    ▼
┌─────────────────────────────────────┐
│                                     │
│                 13                  │
│                                     │
└─────────────────────────────────────┘
                    ▼
┌─────────────────────────────────────┐
│                                     │
│                 14                  │
│                                     │
└─────────────────────────────────────┘
                    ▼
┌─────────────────────────────────────┐
│                                     │
│                 15                  │
│                                     │
└─────────────────────────────────────┘
                    ▼
┌─────────────────────────────────────┐
│                                     │
│                 16                  │
│                                     │
└─────────────────────────────────────┘
```

Fig. 1

Fig. 2

Fig. 3

Fig. 4a

Fig. 4b

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Prediction of passive intermodulation from coaxial connectors in microwave networks. **HENRIE J. ; CHRISTIANSON A. ; J. CHAPPELL W.** IEEE Transactions on Microwave Theory and Techniques. Purdue University, Janvier 2008, vol. 56

- **SOMBRIN ; SOUBERCAZE-PUN ; ALBERT.** Multi-carrier Passive Inter-modulation Prédiction from 2-carrier measurements. *31st AIAA International Communication Satellite Conférence,* 14 Octobre 2013